# EUROPÄISCHE PATENTSCHRIFT

(11) **EP 1 772 679 B1**
(45) Veröffentlichungstag und Bekanntmachung des Hinweises auf die Patenterteilung: **22.05.2019**
(21) Anmeldenummer: 06017600.5
(22) Anmeldetag: 24.08.2006
(51) Int. Cl.: F24F 1/02, F24F 12/00, F24F 13/20

(54) **Dezentrale raumlufttechnische Einrichtung**
Decentralised room air treating device
Appareil décentralisé de traitement de l'air d'une pièce

(30) Priorität: 22.09.2005 DE 102005045871
(43) Veröffentlichungstag der Anmeldung: 11.04.2007
(73) Patentinhaber: LTG Aktiengesellschaft, 70435 Stuttgart (DE)
(72) Erfinder:
(74) Vertreter: Clarenbach, Carl-Philipp

(56) Entgegenhaltungen:
- EP-A1- 1 162 411
- EP-A1- 1 367 331
- EP-A2- 1 248 049
- WO-A-03/073012
- DE-A1- 3 306 455
- DE-A1- 10 010 817
- DE-C1- 10 022 354
- GB-A- 2 218 196
- US-A- 4 136 606
- US-A- 4 440 342

## Beschreibung

Die Erfindung betrifft einen Raum mit einer dezentralen raumlufttechnischen Einrichtung zum Klimatisieren und/oder Belüften des Raumes, gemäß Oberbegriff des Anspruchs 1.

Derartige dezentrale raumlufttechnische Einrichtungen sind bekannt. Aufgrund ihres dezentralen Charakters werden sie nicht über ein Kanalsystem oder dergleichen von einer Luftzentrale eines Gebäudes versorgt, um den Raum des Gebäude zu klimatisieren beziehungsweise zu belüften, sondern sie beziehen ihre Frischluft, insbesondere Außenluft, durch einen Frischlufteinlass, insbesondere Außenlufteinlass. Hierzu kann die Fassade des Gebäudes mit einer Außenluftöffnung versehen sein, die mit der dezentralen raumlufttechnischen Einrichtung verbunden ist.

Bei den bekannten dezentralen raumlufttechnischen Einrichtungen besteht der Nachteil, dass eine aufwendige Montage erforderlich ist und/oder in baulicher Hinsicht ein relativ großer Aufwand betrieben werden muss, um sie in dem zu klimatisierenden und/oder belüftenden Raum unterzubringen. So ist es bei Unterflurgeräten beispielsweise erforderlich, einen entsprechenden Doppelboden vorzusehen. Wird eine derartige bekannte Einrichtung im Deckenbereich des Raumes angeordnet, so ist hierfür vorzugsweise eine abgehängte Decke auszubilden. Erfolgt eine Fassadenaufstellung, so befindet sich ein derartiges Gerät üblicherweise unterhalb der Fenster der Fassade, insbesondere unter einer Fensterbank. Neben der baulich aufwendigen Berücksichtigung treten die bekannten dezentralen raumlufttechnischen Einrichtungen oftmals optisch störend in Erscheinung und sie beschränken durch ihre Aufstellen gegebenenfalls auch die flexible Nutzung eines Raumes, da sie beispielsweise in Nutzzonen hineinragen. Da die raumlufttechnische Einrichtung eine ihr entsprechende Standfläche im Raum einnimmt, kann hierdurch der einer Mietzahlung zugrundeliegende Flächeninhalt des Raumes verkleinert werden, was möglicherweise zu einer Mietreduktion führt.

Die Patentschrift DE 100 22 354 C1 offenbart eine in eine Fassade eines Gebäudes integrierte raumlufttechnische Einrichtung. Die Einrichtung ist unterhalb eines Fensterbretts angeordnet und weist ein Gehäuse mit einem Zulufteinlass und einem Fortluftauslass auf. Der Einlass und der Auslass sind auf einer gleichen, parallel zur Längserstreckung des Gehäuses verlaufenden Seite des Gehäuses angeordnet.

Der Erfindung liegt daher die Aufgabe zugrunde, eine dezentrale raumlufttechnische Einrichtung der eingangs genannten Art zu schaffen, die den baulichen Aufwand minimiert, optisch nicht störend in Erscheinung tritt und insbesondere ferner einfach und problemlos zu installieren und gegebenenfalls nachzurüsten und/oder flexibel aufzurüsten oder abzurüsten ist.

Diese Aufgabe wird durch eine raumlufttechnische Einrichtung mit den Merkmalen des Anspruchs 1 gelöst. Erfindungsgemäß ist das Gehäuse der raumlufttechnischen Einrichtung als flaches Langgehäuse ausgebildet. Diese Gehäusegestalt erlaubt eine unauffällige Aufstellung insbesondere entlang einer Raumfläche, ohne dass die Einrichtung optisch störend in Erscheinung tritt oder in den Raum störend hineinragt. "Flach" bedeutet in diesem Zusammenhang, dass nur eine sehr geringe Bautiefe in dieser Dimension gegenüber den anderen beiden Dimensionen vorliegt. "Langgehäuse" bedeutet, dass die Dimension Länge gegenüber den anderen Dimensionen Breite und Tiefe wesentlich größer ist, dass demgemäß das Gehäuse eine relativ große Länge gegenüber der Baubreite aufweist und dass ferner die Bautiefe des Gehäuses wesentlich kleiner als die Baubreite ist. Demgemäß liegt eine schlanke Gehäusebauform vor, die dennoch eine große raumlufttechnische Wirkung durch ihren kompakten Aufbau gewährleistet, d.h., in dem schlanken und mit nur geringer Bautiefe versehenen Gehäuse sind auf kompakten Raum lufttechnische Komponenten angeordnet, die beispielsweise Luftströme von 50 bis 300 m³ pro Stunde, insbesondere 100 bis 200 m³ pro Stunde bei sehr geringem Schallleistungspegel (< 45 dB (A)) fördern. Erfindungsgemäß wird das flache Langgehäuse in die Fassade des Raumes integriert; es liegt also ein Einbau in die Fassade vor. Hierbei wird vorzugsweise die Bautiefe der Fassade nicht vergrößert, das heißt, das in die Fassade eingebaute Langgehäuse fluchtet mit der üblichen Fassadenkontur, ragt also nicht aus dieser heraus.

Insbesondere ist die dezentrale raumlufttechnische Einrichtung zum Klimatisieren und/oder Belüften des Raumes gekennzeichnet durch die wählbare Zusammensetzung aus mindestens einem eine lufttechnische Funktion ausübenden Teilgerät aus einer Auswahl von mehreren zur Verfügung stehenden, gleiche oder unterschiedliche lufttechnische Funktionen aufweisenden Teilgeräten. Insgesamt liegt demzufolge ein System-Baukasten vor, der mehrere Teilgeräte umfasst, die unterschiedliche lufttechnische Funktionen aufweisen. So können die verschiedenen Teilgeräte zum Beispiel die Funktionen: Zuluft, Abluft, Wärmerückgewinnung, Umluft usw. ausüben, sodass durch eine gezielte Auswahl aus diesen verschiedenen Teilgeräten zu einer dezentralen raumlufttechnischen Einrichtung mit dem entsprechenden Funktionsumfang führt. Im einfachsten Fall wird aus den verschiedenen Teilgeräten nur eines ausgewählt und dieses dem Raum zugeordnet. Werden mehrere Teilgeräte ausgewählt und diese entsprechend zusammengesetzt, so liegt eine dezentrale raumlufttechnische Einrichtung vor, die eine entsprechende Luftbehandlung gemäß der Funktionen der Teilgeräte ermöglicht. Die Teilgeräte werden im Raum nicht an unterschiedlichen Stellen aufgestellt, sondern aneinander befestigt und bilden so ein Gesamtgerät. Die Teilgeräte sind hinsichtlich der Luftführung, Luftanschlüsse, Wasseranschlüsse, Stromanschlüsse usw. derart ausgestattet, dass durch das Aneinanderbefestigen von Teilgeräten entsprechende Lüftungswege, Wasserführungswege und/oder Stromwege auf einfache Weise durch fluchtende Kanal-, Rohr- und Leitungsführung herbeigeführt werden können. Insbesondere ist es auch möglich, dass die entsprechenden Verbindungen sich automatisch beim Zusammensetzen erstellen.

Wie bereits angedeutet, können mehrere Teilgeräte insbesondere zur Bildung eines Gesamtgeräts wählbar aneinander befestigt werden. Hierbei ist insbesondere vorgesehen, dass die Teilgeräte reihenförmig aneinander befestigt werden, das heißt, die einzelnen Teilgeräte bilden eine geradlinige Reihe.

Ferner ist es vorteilhaft, wenn jedes Teilgerät ein Teilgehäuse aufweist. Das Aneinanderreihen der Teilgehäuse erfolgt demzufolge vorzugsweise dadurch, dass die einzelnen Teilgehäuse aneinander befestigt werden.

Die Teilgehäuse werden bevorzugt in Richtung ihrer jeweiligen Längserstreckung aneinander befestigt. Insbesondere ist vorgesehen, dass mindestens eines der Teilgehäuse oder mehrere aneinandergereiht aneinander befestigte Teilgehäuse das Gehäuse, insbesondere das vorstehend bereits erwähnte flache Langgehäuse bilden. Das flache Langgehäuse kann - wie vorstehend erwähnt - dazu dienen, mindestens eine lufttechnische Komponente, vorzugsweise mehrere lufttechnische Komponenten aufzunehmen. Diese werden somit - vorzugsweise aneinandergereiht - in das Langgehäuse eingebracht. Alternativ ist es - wie ebenfalls bereits erwähnt - auch möglich, dass eine flache, schlanke und entsprechend lange raumlufttechnische Einrichtung dadurch gebildet wird, dass einzelne Teilgeräte reihenförmig aneinander befestigt werden, sodass ihre einzelnen Teilgehäuse insgesamt das flache Langgehäuse bilden. Vorzugsweise ist dabei vorgesehen, dass auch jedes Teilgehäuse als flaches Teil-Langgehäuse ausgebildet ist. Die Definitionen im Hinblick auf "flach" und "lang" betreffend den Ausdruck "flaches Teil-Langgehäuse" entsprechend denen, die vorstehend bereits zum "flachen Langgehäuse" dargelegt wurden.

Nach einer Weiterbildung der Erfindung ist vorgesehen, dass die Abmessungen jedes Teil-Langgehäuses und/oder des Langgehäuses hinsichtlich seiner Bautiefe (T) zur Baubreite (B') zur Baulänge (L) das Verhältnis von etwa 1 : 2 bis 3 : 3 bis 35 aufweisen. Bevorzugt ist es, wenn ein sich aus mehreren Teilgehäusen zusammensetzendes Langgehäuse in den Abmessungen von Bautiefe zu Baubreite zu Baulänge das Verhältnis von etwa 1 : 2 bis 3 : >10 aufweist. Ein "kleines" Teilgerät, das klein ist, weil die mit ihm durchgeführte lufttechnische Funktion keine großen Bauteile erfordert, kann beispielsweise folgende Abmessungen aufweisen: T = 160 mm, B' = 400 mm, L = 1300 mm. Ein großes Teilgehäuse kann beispielsweise folgende Abmessungen aufweisen: T = 160 mm, B' = 400 mm, L = 2700 mm.

Erfindungsgemäß ist das Langgehäuse ein der Länge nach aufrecht aufgestelltes Gehäuse. Demzufolge wird es nicht "liegend", sondern aufrecht aufgestellt im zu klimatisierenden und/oder zu belüftenden Raum. Insbesondere wird auch ein Teilgerät mit seinem flachen Teil-Langgehäuse aufrecht stehend im Raum aufgestellt. Dies erfolgt bevorzugt durch Integration in die Fassade. Ist ein Teil-Langgehäuse nicht so hoch wie die Raumhöhe oder sind mehrere aneinander gereihte Teil-Langgehäuse nicht so hoch wie die Raumhöhe des Raumes, so endet ein derartiges aus den Teil-Langgehäusen zusammengesetztes Langgehäuse bei Aufstellung auf dem Boden des Raumes nicht an der Decke, sondern mit entsprechendem vertikalen Abstand zur Decke. Der über der raumlufttechnischen Einrichtung bis zur Decke reichende Bauraum wird dann vorzugsweise mit einer Isolierung und einer entsprechenden, vorzugsweise mit der raumlufttechnischen Einrichtung fluchtenden Abdeckung versehen. Wird im Zuge von Nachrüstungsarbeiten einer bereits vorliegenden dezentralen raumlufttechnischen Einrichtung ein weiteres Teilgerät dem vorhandenen Teilgerät oder den vorhandenen Teilgeräten zugeordnet, so verlängert sich dadurch die Länge des Langgehäuses. Demzufolge ist es in einfacher Weise möglich, einen entsprechenden Bereich der erwähnten Isolierung zu entfernen, sodass das nunmehr längere Langgehäuse in den dadurch geschaffenen Freiraum hineinragen kann. In der vollen Ausbaustufe weist die raumlufttechnische Einrichtung eine Bauhöhe (L) auf, die raumhoch ist.

Erfindungsgemäß ist vorgesehen, dass das Langgehäuse als raumhohes Gehäuse ausgebildet ist. Es erstreckt sich demzufolge zwischen Fußboden und Decke des Raumes und kann als schlanke Gestalt demzufolge in die Raumkontur und/oder Fassade integriert sein.

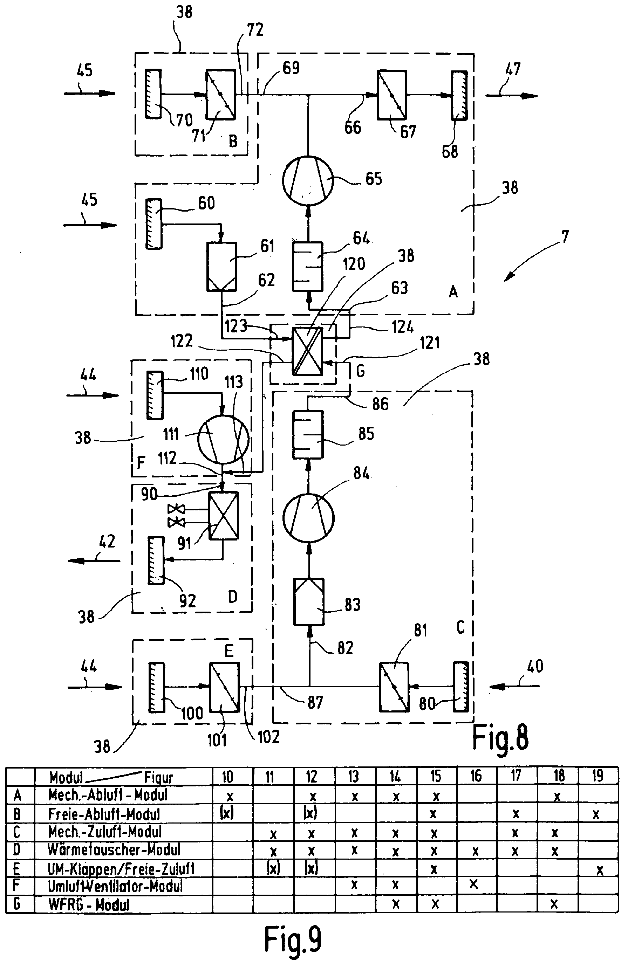

Das Langgehäuse weist bevorzugt eine Bauhöhe von 1.800 bis 3.500 mm, insbesondere 2.000 bis 3.000 mm, auf. Die Baubreite beträgt 300 bis 500 mm, insbesondere 350 bis 450 mm. Die Bautiefe beträgt 100 bis 300 mm, insbesondere 130 bis 200 mm. Sofern das Langgehäuse aus aneinandergereihten und aneinander befestigten Teil-Langgehäuse zusammengesetzt ist, ergibt sich eine Bauhöhe entsprechend der Summe der Einzelbauhöhen der Teil-Langgehäuse. Liegt bei aneinandergereihten Teil-Langgehäusen ein Langgehäuse gemäß Vollausbau vor, wenn also die dezentrale raumlufttechnische Einrichtung den maximalen Funktionsumfang gemäß der Ausgestaltung der Figur 8 aufweist, so liegt ein raumhohes Gesamtgehäuse vor, wobei das Verhältnis von Bautiefe zu Baulänge 1:10 bis 1 : 20 beträgt.

Nach einer bevorzugten Ausbildung der Erfindung ist vorgesehen, dass zumindest einige, insbesondere sämtliche der lufttechnischen Komponenten zueinander reihenförmig im Langgehäuse angeordnet sind. Durch diese reihenförmige Anordnung der lufttechnischen Komponenten ergibt sich der bereits erwähnte kompakte und dennoch leistungsstarke Aufbau. Ferner wird das schlanke Langgehäuse auf diese Art und Weise optimal räumlich genutzt.

Es kann vorgesehen sein, dass zumindest einige der lufttechnischen Komponenten in Richtung der Baubreite und/oder Bautiefe des Langgehäuses, also in Quererstreckung des Langgehäuses und/oder in Tiefenerstreckung des Langgehäuses, nebeneinander und/oder hintereinander im Langgehäuse angeordnet sind. Bei diesen nebeneinander/hintereinander liegenden Komponenten handelt es sich bevorzugt um kleinvolumig bauende Komponenten, die eine Nebeneinanderanordnung/Hintereinanderordnung gestatten. Großvolumigere lufttechnische Komponenten werden bevorzugt -wie vorstehend erwähnt- reihenförmig in Längsrichtung des Langgehäuses angeordnet.

Erfindungsgemäß sind zumindest ein Zulufteinlass und mindestens ein Fortluftauslass vorgesehen, wobei sich der Zulufteinlass an einer ersten Seite des Langgehäuses und der Zuluftauslass an einer der ersten Seite gegenüberliegenden zweiten Seite des Langgehäuses befindet. Zulufteinlass und Fortluftauslass liegen demzufolge an diametral gegenüberliegenden Seiten des Langgehäuses. Dabei ist erfindungsgemäß vorgesehen, dass die erste und die zweite Seite quer, insbesondere rechtwinklig zu der Richtung der Längserstreckung des Langgehäuses verlaufen. Es handelt sich demzufolge bei diesen beiden mit Zulufteinlass und Fortluftauslass versehenen Seiten des Langgehäuses um die Bodenseite und die Deckenseite oder jeweils einen Bereich von Bodenseite und Deckenseite bei dem aufrecht aufgestellten Langgehäuse. Hierdurch besteht der besondere Vorteil, dass die als Außenluft in den Zulufteinlass eintretende Luft durch eine entsprechende Luftführung in der Fassade von der Außenatmosphäre in das Gerät einströmen kann. Die Fortluft verlässt die lufttechnische Einrichtung durch den Fortluftauslass, der im Deckenbereich des Raumes liegt und bevorzugt über einen Fassadenkanal oder dergleichen nach außen mit der Außenatmosphäre verbunden ist. Die vorstehenden Ausführungen dieses Absatzes beziehen sich auf die Ausgestaltung eines Langgehäuses, in dem mindestens eine Komponente untergebracht ist oder aber auch auf die Ausführung des Langgehäuses, das sich aus mindestens einem Teil-Langgehäuse zusammensetzt. Es ist bei beiden vorstehend genannten Ausführungsvarianten auch möglich, dass Zulufteinlass und Fortluftauslass nicht an Bodenseite und Deckenseite des Langgehäuses angeordnet ist, sondern auf der Rückseite des Langgehäuses, also auf der dem Raum abgewandten Seite, um beispielsweise bei Aufstellung an einer Außenwand einer Wohnung oder eines Ein- oder Mehrfamilienhauses auf einfache Art und Weise einen Außenlufteinlass des Gebäudes mit dem Zulufteinlass des Gerätes und den Fortluftauslass des Gerätes mit einer Fortluftöffnung des Gebäudes verbinden zu können. Auch bei einem Fassadeneinbau sind Konstellationen möglich, die an der Rückseite liegende Einlässe und Auslässe des Geräts erfordern. Natürlich können auch die Seiten der raumlufttechnischen Einrichtung genutzt werden, um hier mindestens einen Zulufteinlass und mindestens einen Fortluftauslass vorzusehen. Auch Mischformen der erwähnten verschiedenen Stellen hinsichtlich der Anordnung des mindestens einen Einlasses und des mindestens einen Auslasses sind denkbar.

Insbesondere ist vorgesehen, dass die erste Seite oder die zweite Seite eine Standseite des Flachgehäuses ist. Befindet sich beispielsweise an der ersten Seite, also der Bodenseite des Langgehäuses, der Zulufteinlass, so wird dieser durch das Aufstellen des Gehäuses unmittelbar mit einem Außenluftkanal oder dergleichen verbunden, der sich in der Fassade oder einem Bauteil des Gebäudes (sofern eine Fassadenaufstellung vorliegt) oder sich an einem anderen Gebäudeelement im Bodenbereich befindet. Durch das Aufstellen wird demzufolge automatisch und gleichzeitig eine zulufttechnische Verbindung hergestellt. Da die raumlufttechnische Einrichtung durch die Länge ihres Langgehäuses den Raumdimensionen des zu belüftenden oder zu klimatisierenden Raumes angepasst ist, kann durch das Aufstellen ferner eine lufttechnische Verbindung an der zweiten Seite des Flachgehäuses, also an der der Bodenseite diametral gegenüberliegenden Deckenseite erfolgen, sodass auch dort durch das Aufstellen gleichzeitig und ohne dass besondere Maßnahmen ergriffen werden müssen eine Verbindung beispielsweise für die Fortluft hergestellt wird.

Von besonderer Bedeutung ist es, wenn die zweite Seite als höhenverstellbare Seite ausgebildet ist. Dies hat den Vorteil, dass die Abmessungen des Langgehäuses bei noch nicht höhenverstellter, zweiten Seite etwas kleiner als das Einbaulängenmaß ist und dass nach dem Aufstellen die zweite Seite oder ein Teil davon nach oben verstellt wird, wodurch nicht nur das Langgehäuse "klemmend" zwischen entsprechenden Raumkomponenten aufgenommen wird und dadurch einen sicheren Stand erhält, sondern gleichzeitig die beispielsweise an der zweiten Seite liegende Fortluft des an der zweiten Seite liegenden Fortluftauslasses mit einem entsprechenden gebäudeseitigen Gegenelement, also beispielsweise einem Fortluftkanal, lufttechnisch dicht gekoppelt wird. Eventuell dort vorhandene Dichtungen werden durch die Höhenverstellbarkeit der Seite aufeinander gepresst, wodurch eine leckagefreie Luftverbindung geschaffen wird.

Eine Weiterbildung der Erfindung sieht eine Zulufteinrichtung und eine Ablufteinrichtung vor, die jeweils mindestens eine der lufttechnischen Komponenten aufweisen. Hierbei kann vorgesehen sein, dass der Zulufteinlass der Zulufteinrichtung und der Fortluftauslass der Ablufteinrichtung angehören. Zulufteinrichtung und Ablufteinrichtung sind direkt gekoppelt (ohne Wärmerückgewinnungsvorrichtung) oder sind vorzugsweise wärmetechnisch über mindestens eine Wärmerückgewinnungsvorrichtung gekoppelt oder diese beiden Einrichtungen lassen sich betriebsartenabhängig zum Wärmetausch und/oder Feuchtigkeitsaustausch koppeln. Insbesondere kann vorgesehen sein, dass die Wärmerückgewinnungsvorrichtung nicht nur einen Wärmeaustausch zwischen der Zulufteinrichtung und der Ablufteinrichtung vornimmt, sondern auch eine Feuchteübertragung, um beispielsweise kalte, trockene Außenluft sowohl vorzuwärmen als auch anzufeuchten. Das Vorwärmen und Anfeuchten erfolgt durch die Abluft, insbesondere Raumluft.

Nach einer Weiterbildung der Erfindung ist vorgesehen, dass ein Teilgerät als Zulufteinrichtung und/oder ein Teilgerät als Ablufteinrichtung ausgebildet sein kann. Als Grundausstattung kann eines der beiden Teilgeräte dem Raum zugeordnet werden. So ist es beispielsweise möglich, zunächst nur ein Teilgerät als Zulufteinrichtung in die Fassade einzubauen. Die Ablüftung erfolgt dann beispielsweise zentral, also durch entsprechende gebäudeinterne Einrichtungen. Soll zu einem späteren Zeitpunkt auch eine Ablufteinrichtung bei der dezentralen raumlufttechnischen Einrichtung realisiert werden, so wird an das Teilgerät der Zulufteinrichtung das Teilgerät der Ablufteinrichtung angeschraubt. Dies erfolgt in Längserstreckung der jeweiligen Geräte, sodass sich ein dementsprechend längeres Gesamtgehäuse ergibt. Anstelle einer Schraubverbindung kann selbstverständlich auch auf andere Art und Weise ein Verbinden der beiden Teilgeräte erfolgen, beispielsweise durch Rastverbindungen oder dergleichen.

Die Wärmerückgewinnungsvorrichtung kann bevorzugt als Rotationswärmerückgewinner, insbesondere Wärmerad bzw. Sorptionsrad, ausgebildet sein. Hierunter ist eine sich drehende Einrichtung, insbesondere ein sich drehendes Rad, zu verstehen, das eine Vielzahl von Luftkanälen aufweist und durch seine Drehung von der Zone der Zuluft in die Zone der Abluft und entsprechend umgekehrt gelangt, sodass einerseits ein Wärmetauschen und andererseits auch ein Feuchteübergang stattfindet. Die Wärmerückgewinnungsvorrichtung kann demgemäß als regenerative Wärmerückgewinnungsvorrichtung ausgebildet sein, d.h., die Wärmeübertragung findet bevorzugt über Speichermassen statt, wobei auch ein Stoffaustausch möglich ist (Luftaustausch). Alternativ ist es auch möglich, dass eine rekuperative Wärmerückgewinnungsvorrichtung vorgesehen ist, die eine Übertragung der Wärme über feste Trennflächen vornimmt und bei der keine Vermischung der Stoffströme stattfindet. Im Falle des Zusammensetzens des Langgehäuses aus Teil-Langgehäuse, gelten die vorstehend erwähnten Ausführungen zur regenerativen und zur rekuperativen Wärmerückgewinnungsvorrichtung entsprechend. Bei beiden Ausführungsvarianten bezüglich der Langgehäuse-Ausgestaltung ist es möglich, bei der rekuperativen Wärmerückgewinnungsvorrichtung einen Luft-Luft-Wärmetauscher mit jeweils einer 180°-Luftumlenkung der beiden wärmetauschenden Luftströme vorzusehen. Sofern die Wärmerückgewinnungsvorrichtung ein separates Teil-Langgehäuse aufweist, liegt ein Teilgerät vor, das die lufttechnische Funktion der Wärmerückgewinnung vornimmt und insbesondere zwischen dem Teilgehäuse der Zulufteinrichtung und dem Teilgehäuse der Ablufteinrichtung angeordnet wird, sodass - in Längsrichtung betrachtet - die Zulufteinrichtung an die Wärmerückgewinnungseinrichtung und die Wärmerückgewinnungseinrichtung an die Ablufteinrichtung angrenzen.

Nach einer Weiterbildung der Erfindung ist es vorteilhaft, dass die Zulufteinrichtung und Ablufteinrichtung in Längsrichtung des Langgehäuses aufeinander folgend zonal angeordnet sind. Dabei kann es vorteilhaft sein, wenn zumindest einige der lufttechnischen Komponenten zonal, insbesondere zonal aneinandergrenzend, insbesondere in Längsrichtung des Langgehäuses zonal, insbesondere in Längsrichtung des Langgehäuses zonal aneinandergrenzend, im Langgehäuse angeordnet sind. Durch diese zonale Aufteilung des Raumes innerhalb des Langgehäuses, wobei in jeder Zone eine entsprechende lufttechnische Komponente untergebracht ist, ergibt sich ein klar gegliederter, übersichtlicher Aufbau, der auch die Ausbildung von einzelnen Modulen gestattet, die in die jeweilige Zone bei Bedarf eingesetzt oder aus dieser wieder herausgenommen werden kann. Demzufolge ist die zonal aufgeteilte lufttechnische Einrichtung geeignet, verschiedene Ausbaustufen aufzuweisen und gestattet einen Umbau beziehungsweise eine Nachrüstung mittels der verschiedenen lufttechnischen Komponenten. Es ist daher möglich, dass die raumlufttechnische Einrichtung bei Erstellung des Gebäudes zunächst nur als Lüftungseinrichtung ausgebildet ist. Soll zu einem späteren Zeitpunkt eine andere Nutzung erfolgen, so lässt sich durch Einsetzen eines Klimamoduls eine wärmetechnische Behandlung realisieren. Ist beispielsweise ferner noch keine Umlufteinrichtung vorhanden, so kann durch Nachrüstung einer entsprechenden zonalen Einheit auch diese Funktion realisiert werden. Auch eine Abrüstungsmaßnahme lässt sich problemlos durchführen, wenn beispielsweise ein Nutzer eines Raumes einen vorher vorhandenen Komfort nicht mehr benötigt, weil beispielsweise ein Büroraum nunmehr als Lagerraum dient.

Die Wärmerückgewinnungsvorrichtung ist - sofern vorhanden - bevorzugt zonal zwischen der Zulufteinrichtung und der Ablufteinrichtung angeordnet, sodass zwischen diesen beiden Einrichtungen der gewünschte Wärmetausch stattfinden kann, um in den Wintermonaten kalte Außenluft durch wärmere Abluft anzuwärmen beziehungsweise in den Sommermonaten warme Außenluft durch kühlere Raumluft abzukühlen.

Die Baubreite des Langgehäuses entspricht vorzugsweise der Baubreite der breitesten der Komponenten. Dementsprechend wird bei der Bautiefe vorgegangen, d.h., die Bautiefe des Langgehäuses entspricht der tiefsten Bautiefe der Komponenten. Sofern sich das Langgehäuse aus mindestens einem Teilgehäuse zusammensetzt, entspricht die Baubreite des Teilgehäuses oder aller verwendeter Teilgehäuse der Baubreite des Langgehäuses. Entsprechendes gilt für die Bautiefe, das heißt, die Bautiefe des Teilgehäuses oder aller Teilgehäuse entspricht der Bautiefe des Langgehäuses. Mit anderen Worten gilt, dass die Baubreiten aller Teilgehäuse gleich groß und die Bautiefen aller Teilgehäuse ebenfalls gleich groß ist. Die Baulängen der Teilgehäuse kann in Abhängigkeit von der lufttechnischen Funktion unterschiedlich sein. Die Gesamt-Baulänge des so gebildeten Langgehäuses ergibt sich durch die Summe der Baulängen der einzelnen Teilgehäuse, die in Längserstreckung aneinandergereiht werden.

Es ist vorteilhaft, wenn mindestens eine lufttechnische Komponente, insbesondere sämtlichen lufttechnischen Komponenten, als Modul/Module wählbar in das Langgehäuse einsetzbar beziehungsweise aus dem Langgehäuse entnehmbar ausgebildet ist/sind. Dies entspricht dem bereits vorher dargelegten Gedanken, dass eine derartige lufttechnische Einrichtung durch entsprechende Auswahl von lufttechnischen Komponenten den jeweiligen Bedürfnissen angepasst werden kann. Umrüstmaßnahmen, Nachrüstmaßnahmen und Abrüstmaßnahmen sind auf diese Art und Weise problemlos möglich. Dabei bleibt das Langgehäuse stets dasselbe; es nimmt eben nur unterschiedliche Komponenten wählbar auf.

Nach einer Weiterbildung der Erfindung ist vorgesehen, dass mindestens eine lufttechnische Komponente, insbesondere sämtliche lufttechnischen Komponenten beziehungsweise mindestens ein Modul, insbesondere sämtliche Module als Teilgehäuse aufweisende Teilgeräte ausgebildet sind und in wählbarer Zusammenstellung gehäusemäßig aneinanderreihbar aneinander befestigbar sind. Bei den Komponenten beziehungsweise Modulen beziehungsweise Teilgeräten handelt es sich bevorzugt um ein Zuluft-Teilgerät, um ein Abluft-Teilgerät, um ein Wärmerückgewinnungs-Teilgerät und/oder um ein Umluft-Teilgerät. Es ist jedoch auch möglich, die in den beiden nachfolgenden Absätzen erwähnten Komponenten beziehungsweise Module jeweils als Teilgerät zu realisieren, wobei die einzelnen Teilgeräte wählbar aneinanderreihbar sind, um ein Gesamtgerät mit einem entsprechend langen Langgehäuse zu schaffen.

Eine Weiterbildung der Erfindung sieht vor, dass als lufttechnische Komponenten folgende Funktionseinheiten zur Verfügung stehen: Mechanische-Abluft-Komponente, Freie-Abluft-Komponente, Mechanische-Zuluft-Komponente, Wärmetauscher-Komponente, Umluft-Klappen-/ Freie-Zuluft-Komponente, Umluft-Ventilator-Komponente, Wärmerückgewinnungskomponente und/oder Wärmerückgewinnungs-Feuchte-Komponente.

Die von den lufttechnischen Komponenten in Modulbauweise gebildeten Module sind demzufolge: Mechanisches-Abluft-Modul, Freie-Abluft-Modul, Mechanisches-Zuluft-Modul, Wärmetauscher-Modul, Umluft-Klappen-/Freie-Zuluft-Modul, Umluft-Ventilator-Modul, Wärmerückgewinnungs-Modul und/oder Wärmerückgewinnungs-Feuchte-Modul.

Nach einer Weiterbildung der Erfindung ist vorgesehen, dass die Wärmetauscher-Komponente mindestens einen Wärmtauscher aufweist, der an wasserführende Leitungen angeschlossen ist, die derart in dem Langgehäuse verlaufen, dass an ihnen vorbeiströmende Luft durch die Temperatur der Leitungen temperiert wird. Demzufolge lässt sich der knappe Bauraum im schlanken Langgehäuse optimal nutzen, da die dort verlaufenden wasserführenden Leitungen gleichzeitig für eine weitere Funktion, nämlich für eine Temperaturtauschfunktion genutzt werden können. Auf diese Art und Weise ist es möglich, die Funktion des Wärmetauschers zu unterstützen.

Eine weitere Ausgestaltung der Erfindung sieht vor, dass die Umluft-Ventilator-Komponente als Ventilator einen Querstromventilator, insbesondere mit Freistrahl, aufweist.

Ferner ist es vorteilhaft, wenn zumindest eine der lufttechnischen Komponenten mit einer Schalldämpfungseinrichtung versehen ist. Vorzugsweise sind alle diejenigen lufttechnischen Komponenten mit Schalldämpfungsmaßnahmen versehen, die zur Geräuschentwicklung der dezentralen raumlufttechnischen Einrichtungen beitragen können. Ist die raumlufttechnische Einrichtung z.B. im Bereich der Fassade angeordnet, so sind die erwähnten Schalldämpfungsmaßnahmen wegen der "freien" Aufstellung erforderlich, damit eine sich im Raum aufhaltende Person keine störende Geräuschkulisse wahrnimmt. Die Schalldämpfungsmaßnahmen der raumlufttechnischen Einrichtung bewirken ferner, dass diese als Schalldämpfer für die Fassade dient, da durch die Fassade eintretende Außengeräusche dadurch gedämpft werden, sodass diese im Raum nicht mehr oder nur noch schwach hörbar sind. Gleiches gilt selbstverständlich entsprechend für andere Aufstellorte der raumlufttechnischen Einrichtung im Raum.

Insbesondere kann vorgesehen sein, dass die raumlufttechnische Einrichtung als Fassadeneinrichtung, insbesondere Fassadenklimamodul-Einrichtung oder Fassadenlüftungsmodul-Einrichtung, ausgebildet ist. Hierbei bildet die dezentrale raumlufttechnische Einrichtung quasi einen "Fassadenstreifen", an den große Fensterflächen der Fassade raumhoch angrenzen, sodass bei einer Vollglasfassade lediglich eine oder mehrere streifenförmige Elemente (also die Einrichtungen) vorgesehen sind, die optisch nicht störend in Erscheinung treten und auch kaum den Lichteinfall behindern, gleichwohl jedoch die raumlufttechnische Einrichtung beziehungsweise raumlufttechnischen Einrichtungen bilden.

Die Zeichnungen veranschaulichen die Erfindung anhand verschiedener Ausführungsbeispiele und zwar zeigt:
- Figur 1: einen Querschnitt durch einen mit dezentraler raumlufttechnischer Einrichtung versehenen Raum, wobei sich die Einrichtung als Fassadenklimamodul bzw. Fassadenlüftungsmodul im Bereich der Fassade eines den Raum aufweisenden Gebäudes befindet,
- Figur 2: eine Draufsicht auf die Fassade des Gebäudes,
- Figur 3: eine Draufsicht auf die Sichtseite der raumlufttechnischen Einrichtung,
- Figur 4: eine Seitenansicht der raumlufttechnischen Einrichtung,
- Figur 5: eine perspektivische Ansicht der raumlufttechnischen Einrichtung,
- Figur 6: eine Draufsicht auf die Sichtseite der raumlufttechnischen Einrichtung mit Strömungspfeilen,
- Figur 7: eine Seitenansicht der raumlufttechnischen Einrichtung mit Strömungspfeilen,
- Figur 8: ein Schaltbild der verschiedene Module aufweisenden raumlufttechnischen Einrichtung,
- Figur 9: eine Modul-Tabelle,
- Figuren 10 bis 19: verschiedene Modulkombinationen der raumlufttechnischen Einrichtung,
- Figur 20: eine Schnittansicht durch den Raum mit dort angeordneter raumlufttechnischer Einrichtung in Draufsicht,
- Figur 21: eine regenerative Wärmerückgewinnungs-Feuchte-Einrichtung in Draufsicht,
- Figur 22: eine Schnittansicht entlang der Linie N-N der Figur 21,
- Figur 23: eine rekuperative Wärmerückgewinnungs-Einrichtung mit 180° -Luftumlenkung,
- Figur 24: einen Schnitt entlang der Linie M-M in Figur 23,
- Figur 25: einen Schnitt entlang der Linie P-P in Figur 23 und
- Figur 26: eine weitere erfindungsgemäße Ausgestaltung einer raumlufttechnischen Einrichtung.

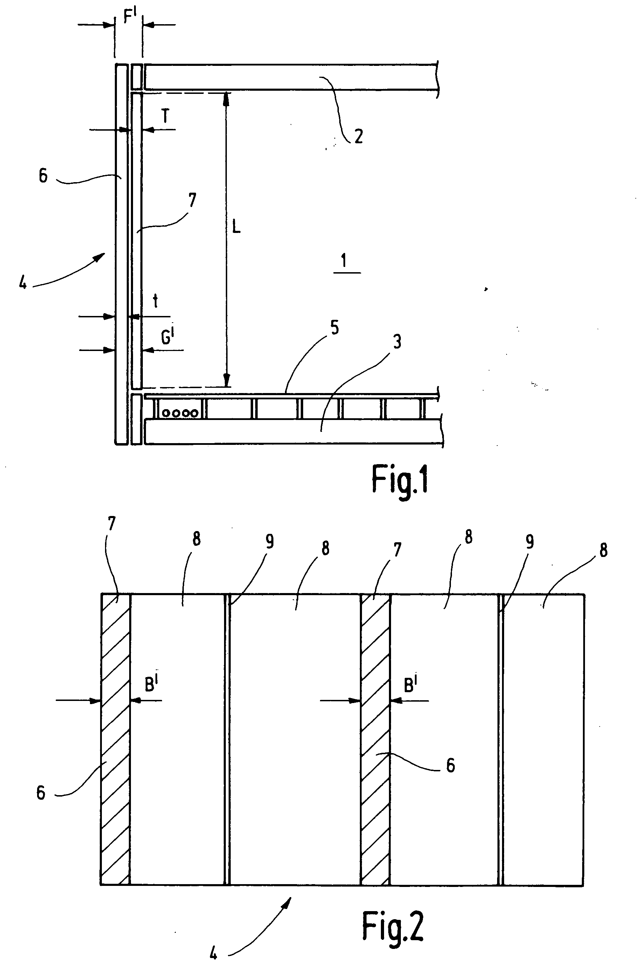

Die Figur 1 zeigt eine Schnittansicht eines Raumes 1 eines nicht näher dargestellten Gebäudes, wobei der Raum 1 eine Rohdecke 2 und einen Rohboden 3 sowie eine Fassade 4 aufweist. Auf dem Rohboden 3 befindet sich ein aufgestelzter Fußboden 5. Die Fassade 4 weist ein Wärmeisolierelement 6 auf, zu dem parallel eine dezentrale raumlufttechnische Einrichtung 7 angeordnet ist. Die dezentrale raumlufttechnische Einrichtung 7 erstreckt sich in ihrer Längsrichtung zwischen der Rohdecke 2 und dem aufgestelzten Fußboden 5 und ist demgemäss raumhoch ausgebildet. Natürlich ist es auch möglich, die raumlufttechnische Einrichtung 7 in einem Raum anzuordnen, der keinen aufgestelzten Fußboden besitzt. Ferner liegt die erwähnte raumhohe Ausgestaltung nur dann vor, wenn - wie nachstehend noch näher ausgeführt wird - die raumlufttechnische Einrichtung aufgrund der Vielzahl ihrer aneinandergereihten Teilgeräte diese Länge aufweist.

Gemäss Figur 2, die eine Draufsicht auf die Fassade 4 zeigt, ist der Raum 1 mit zwei beabstandet zueinander liegenden dezentralen raumlufttechnischen Einrichtungen 7 ausgestattet, wobei zwischen diesen beiden raumlufttechnischen Einrichtungen 7 raumhohe Fenster 8 mit einer Zwischenstrebe 9 angeordnet sind. Ferner weist der Raum 1 zwei weitere Fenster 8 mit Zwischenstrebe 9 auf. Hieraus wird deutlich, dass die Sicht aus dem Fenster 8 durch die Schlankheit der raumlufttechnischen Einrichtungen 7 nicht beeinträchtigt wird. Die raumlufttechnischen Einrichtungen 7 wirken nicht störend und treten auch im Hinblick auf ihre Bautiefe T (Figur 1) nicht besonders in Erscheinung, da die Bautiefe t des Wärmeisolierelements 6 zusammen mit der Bautiefe T der raumlufttechnischen Einrichtung 7 insgesamt die Bautiefe G' aufweist, die etwa der Bautiefe der Fenster 8 zusammen mit den Zwischenstreben 9, also der Bautiefe F' der Fassade 4, entspricht. Die Baubreite B' (Figur 2) jeder der raumlufttechnischen Einrichtungen 7 entspricht der Baubreite jeder der Wärmeisolierelemente 6. Die Baulänge L jeder der raumlufttechnischen Einrichtungen 7 ist gemäss Figur 1 derart ausgebildet, dass beim Aufstellen einer lufttechnischen Einrichtung 7 diese hinsichtlich ihrer Längserstreckung aufrechtstehend raumhoch angeordnet werden kann. Die Fassade 4 des Raumes 1 weist demgemäß eine Bautiefe F' auf, und zwar überall, also auch in Zonen, in denen keine raumlufttechnische Einrichtung 7 vorhanden ist, als auch in den Zonen, in denen jeweils eine raumlufttechnische Einrichtung 7 befindet. Dies bedeutet, dass die raumlufttechnische Einrichtung 7 jeweils in die Fassade 4 derart integriert ist, dass sie nicht die ansonsten vorhandene Bautiefe der Fassade 4 überragt, sondern in diese Fassade aufgenommen ist. Dort wo die Fassade 4 Fenster 8 aufweist, liegt demzufolge die gleiche Bautiefe vor, wie an den Stellen, an denen sich -in die Fassade integriert- eine raumlufttechnische Einrichtung 7 befindet.

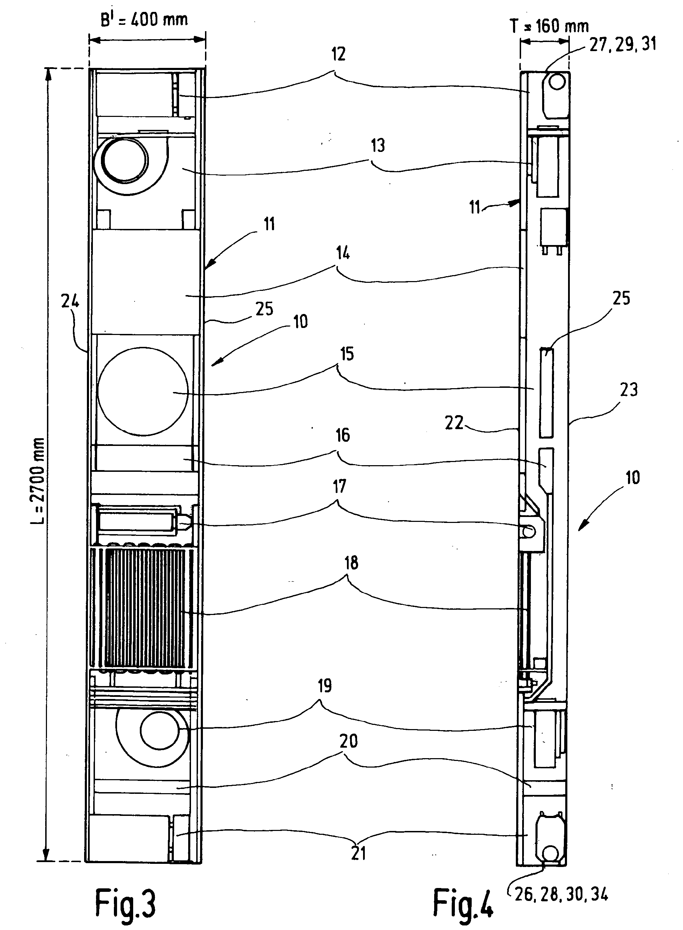

Auf die besonders einfache, aus der Bauform der jeweiligen lufttechnischen Einrichtung 7 resultierende Montage wird im nachstehenden noch näher eingegangen. Gemäss der Figuren 3 und 4 weist die dezentrale raumlufttechnische Einrichtung 7 lufttechnische Komponenten 10 auf, die in einem flachen Langgehäuse 11 angeordnet sind. Das flache Langgehäuse 11 weist eine Bauhöhe L = 2700 mm auf. Die Bauhöhe L entspricht der vorstehend erwähnten Baulänge, die daher ebenfalls mit L bezeichnet ist. Die Baubreite B' beträgt 400 mm und die Bautiefe T 160 mm. Hieraus wird deutlich, dass das flache Langgehäuse 11 gegenüber seiner Baubreite B' eine sehr große Baulänge L aufweist und dass die Baubreite B' erheblich größer als die Bautiefe T ist. Es ergibt sich daher ein sehr schlankes, sich langerstreckendes und dabei eine geringe Bautiefe T aufweisendes Gehäuse, dass ideal im Bereich der Fassade 4 des Gebäudes angeordnet werden kann, ohne optisch störend zu wirken oder raumeinnehmend in Erscheinung zu treten.

Ferner ist den Figuren 3 und 4 zu entnehmen, dass die verschiedenen lufttechnischen Komponenten 10 reihenförmig vorzugsweise aneinandergrenzend im Langgehäuse 11 in Richtung von dessen Längserstreckung angeordnet sind, wobei in den Figuren 3 und 4 folgende lufttechnischen Komponenten 10 zu erkennen sind: Außenluftklappe-Abluft 12, Abluftventilator 13, Abluftfilter 14, Wärmerückgewinnungs-Feuchte-Einrichtung 15, Schalldämpfer 16, Umluft-Tangentialventilator 17, 4-Leiter-Wärmetauscher 18, Zuluftventilator 19, Außenluftfilter 20 und Außenluftklappe-Zuluft 21. Die Figuren 3 und 4 zeigen die raumlufttechnische Einrichtung 7 mit Langgehäuse 11. Dem Langgehäuse 11 kann zusätzlich eine Geräteschale zugeordnet werden, die eine Isolierung aufweist. Die Isolierung wirkt in erster Linie wärmetechnisch, in zweiter Linie jedoch auch schalltechnisch. Die Geräteschale umgibt somit das Langgehäuse 11, das vorzugsweise als Blechgehäuse ausgebildet ist. Derartige Geräteschalen, die das Langgehäuse umgeben, sind auch bei der nachstehend noch näher erläuterten Bauweise vorgesehen, bei der das Langgehäuse aus Teilgehäusen zusammengesetzt ist. In diesem Falle weist jedes Teilgehäuse eine entsprechende Geräteschale mit Isolierung auf, wobei beim Aneinanderreihen der Teilgehäuse auch die entsprechenden Geräteschalen aneinandergereiht werden. Die Teilgehäuse sind vorzugsweise ebenfalls jeweils als Blechgehäuse ausgebildet.

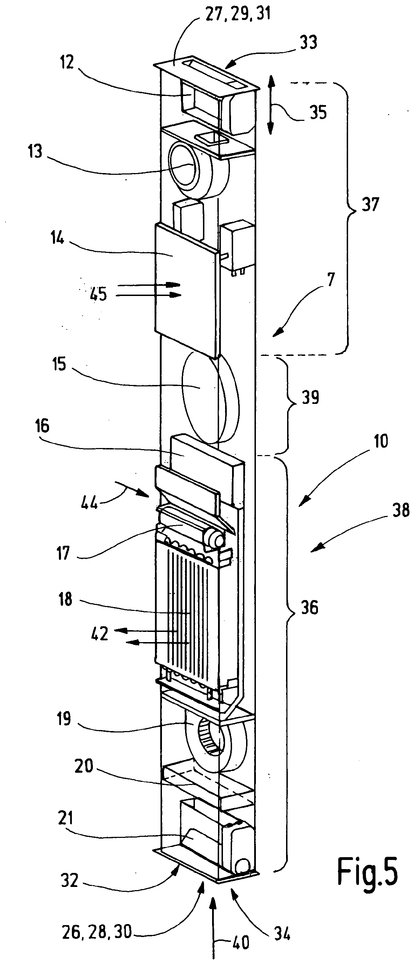

Die Figur 5 verdeutlicht die dezentrale raumlufttechnische Einrichtung 7 der Figuren 3 und 4 nochmals in perspektivischer Ansicht, wobei jedoch die mit Isolierung versehende Geräteschale nicht mit dargestellt ist.

Gemäss der Figuren 3 bis 5 weist das flache Langgehäuse 11 eine Sichtseite 22 auf, die vom Raum 1 aus sichtbar ist. Ihr diametral gegenüber liegt eine Rückseite 23. Ferner besitzt das Langgehäuse 11 zwei einander gegenüberliegende Längsseiten 24 und 25 und zwei einander diametral gegenüberliegende Stirnseiten 26 und 27, wobei die Stirnseite 26 eine erste Seite 28 und die Stirnseite 27 eine zweite Seite 29 bildet und die erste Seite 28 eine Bodenseite 30 und die zweite Seite 29 eine Deckenseite 31 darstellt. Die Begriffe "Bodenseite" und "Deckenseite" resultieren aus der Montageaufstellung der dezentralen raumlufttechnischen Einrichtung 7, so wie sie sich aus den Figuren 1 und 2 ergibt.

Von dem Langgehäuse 11 ist in der Figur 5 nur die erste Seite 28 und die zweite Seite 29 dargestellt. An der ersten Seite 28 befindet sich ein Zulufteinlass 32 und an der zweiten Seite 29 ein Fortluftauslass 33. Das flache Langgehäuse 11 ist quaderförmig aufgebaut, d.h., Sichtseite 22 und Rückseite 23 verlaufen parallel zueinander. Dies gilt auch für die beiden Längsseiten 24 und 25 sowie für die Stirnseite 26 und die Stirnseite 27. Das Langgehäuse 11 weist rechte Winkel auf. Da beim Aufstellen der raumlufttechnischen Einrichtung 7 diese mit ihrer ersten Seite 28 auf eine entsprechendes Bodenelement des Raumes 1 gestellt wird, bildet diese Seite eine Standseite 34. Die zweite Seite 29 ist - wie in Figur 5 mittels eines Doppelpfeiles 35 angedeutet - höhenverstellbar ausgebildet, wodurch auch der Fortluftauslass 33 in der Höhe verändert werden kann. Gleichwohl bleiben die luftströmungstechnischen Eigenschaften erhalten, was beispielsweise mittels eines Faltenbalges oder eines Gehäuseauszugs zum Beispiel mittels teleskopartig aneinandergreifender Bauelemente realisiert werden kann. Der hieraus resultierende Vorteil besteht darin, dass nach dem Aufstellen der raumlufttechnischen Einrichtung 7 auf ihre Stirnseite 34 der dort vorhandene Zulufteinlass 32 mit einem entsprechenden Lufteinlasselement im Bodenelement des Raumes 1 strömungstechnisch verbunden wird. Dies erfolgt vorzugsweise unter Zwischenschaltung einer Dichtung. Die zweite Seite 29 tritt dabei einem entsprechenden Deckenelement des Raumes 1 mit geringem Abstand gegenüber. Wird nun anschließend durch die mittels des Doppelpfeils 35 angedeuteten Verlagerungsmöglichkeit die zweite Seite 29 nach oben gefahren, bis diese zweite Seite 29 dichtend gegen das erwähnte Deckenelement des Raumes 1 tritt, so ist die raumlufttechnische Einrichtung 7 einerseits fest eingespannt aufgestellt, wobei überdies auch der Fortluftauslass 33 mit einem entsprechenden Luftauslass am Deckenelement strömungstechnisch unter Zwischenschaltung einer Dichtung in Verbindung tritt und demzufolge zu der Fassade 4 aufgrund des dieser angehörenden Bodenelements und Deckenelements lufttechnische Verbindungen zur Außenatmosphäre, also zur Außenluft, geschaffen werden. Demzufolge kann mittels des Zulufteinlasses 32 Außenluft angesaugt und mittels des Fortluftauslasses 33 Fortluft an die Außenatmosphäre abgegeben werden. Wird bei der Ausführungsform, bei der sich das Langgehäuse aus mehreren Teilgehäusen zusammensetzt, die durch Verschieben bewirkte Festlegung und auch Anschlussmöglichkeit geschaffen, so ist dort vorgesehen, dass mindestens ein Teilgehäuse relativ zu einem anderen oder zu allen anderen Teilgehäusen verschoben werden kann, um in entsprechender Weise - wie vorstehend beschrieben - die Verbindung zu realisieren, beziehungsweise das Aufstellen zu ermöglichen. Es kann auch vorgesehen sein, dass nicht das gesamte Teilgehäuse des Teilgeräts verschoben wird, sondern lediglich ein Teil des Teilgeräts.

Grundsätzlich lässt sich die dezentrale raumlufttechnische Einrichtung 7 gemäß Figur 5 in eine Zulufteinrichtung 36 und eine Ablufteinrichtung 37 unterteilen, wobei Zulufteinrichtung 36 und Ablufteinrichtung 37 jeweils mindestens eine lufttechnische Komponente 10 aufweisen. Die Anzahl der lufttechnischen Komponenten 10 ist variabel wählbar, da die dezentrale raumlufttechnische Einrichtung 7 - je nach Wunsch - unterschiedlich ausgestaltet werden kann. So ist es beispielsweise möglich, sie nur als sehr einfache Lüftungseinrichtung für den Raum 1 auszustatten. Hierbei ist zu unterscheiden, ob sie lediglich Zuluft zuführt und/oder Abluft abführt. Ferner kann sie als Klimaeinrichtung ausgestaltet sein und insoweit ebenfalls unterschiedliche Ausstattungsmerkmale aufweisen. Auf die einzelnen Ausstattungen wird nachstehend näher eingegangen. Von Besonderheit ist dabei, dass die Ausstattung nicht vorher festgelegt sein muss, sondern eine derartige Flexibilität aufgrund einer Modulbauweise besteht, dass Module 38, die lufttechnische Komponenten 10 darstellen, in gewünschtem Umfang und unterschiedlicher oder gleicher Ausgestaltung in das Langgehäuse 11 einsetzbar beziehungsweise aus diesem herausnehmbar sind, wobei je nach Anzahl und Ausbildung der verwendeten Module 38 eine entsprechende Funktionsvielfalt der dezentralen raumlufttechnischen Einrichtung 7 zur Verfügung steht.

Der Figur 5 ist zu entnehmen, dass zwischen der Zulufteinrichtung 36 und der Ablufteinrichtung 37 eine Wärmerückgewinnungsvorrichtung 39 angeordnet ist, die eine Kopplung von Zulufteinrichtung 36 und Ablufteinrichtung 37 vornimmt. Die Wärmerückgewinnungsvorrichtung 39 stellt ebenfalls eine lufttechnische Komponente 10, also ein lufttechnisches Modul 38 dar. Der Zulufteinrichtung 36 gehört der Zulufteinlass 32 und der Ablufteinrichtung 37 der Fortluftauslass 33 an. Ferner gehört zur Zulufteinrichtung 36 der bereits erwähnte Schalldämpfer 16, der Umluft-Tangentialventilator 17, der 4-Leiter-Wärmetauscher 18 (hier kann auch eine andere Wärmetauscherart eingesetzt werden), der Zuluftventilator 19, der Außenluftfilter 20 und die Außenluftklappe-Zuluft 21. Der Ablufteinrichtung 37 gehört der Abluftfilter 14, der Abluftventilator 13 und die Außenluftklappe-Abluft 12 an. Auf die einzelnen lufttechnischen Komponenten 10 beziehungsweise lufttechnischen Module 38 wird im nachstehenden - wie bereits erwähnt - noch konkreter eingegangen. Dies gilt auch für die erwähnte Wärmerückgewinnungsvorrichtung 39, die bereits -wie vorstehend konkretisiert- als Wärmerückgewinnungs-Feuchte-Einrichtung 15 ausgebildet ist, das heißt, sie nimmt einen Wärmetausch zwischen der Zulufteinrichtung 36 und der Ablufteinrichtung 37 und auch einen Feuchtetausch zwischen den genannten Einrichtungen vor.

Wie den Figuren 3 bis 5 zu entnehmen ist, sind Zulufteinrichtung 36 und Ablufteinrichtung 37 aufeinander folgend zonal in Längsrichtung des Langgehäuses 11 angeordnet. Zwischen diesen beiden Zonen liegt eine weitere Zone, die von der Wärmerückgewinnungsvorrichtung 39 gebildet ist, sodass insgesamt über die Längserstreckung des Langgehäuses 11 ein zonaler Aufbau hinsichtlich der Funktionseinheiten, insbesondere der lufttechnischen Komponenten 10 beziehungsweise der lufttechnischen Module 38 vorliegt. Gegebenenfalls ist es auch möglich, dass relativ kleinbauende Module 38 nicht in Längsrichtung des Langgehäuses zonal angeordnet sind, sondern einige kleinbauende Module 38 auch nebeneinander liegend, also in Richtung der Baubreite B' nebeneinander liegend, angeordnet sind.

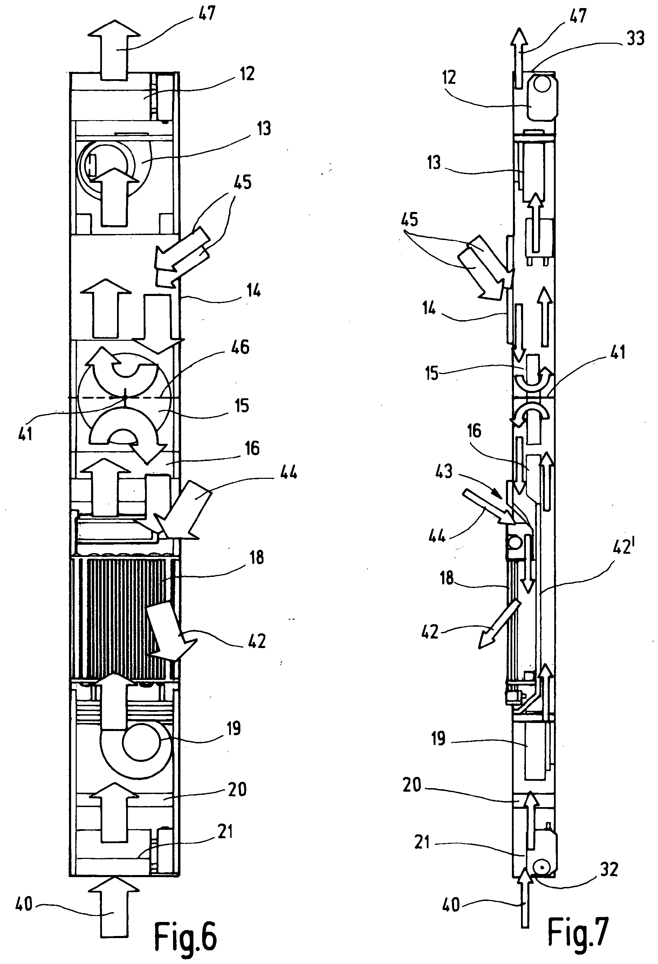

Gemäß der Figuren 6 und 7 erfolgt grundsätzlich die nachstehend erläuterte Durchströmung durch die dezentrale raumlufttechnische Einrichtung 7. Außenluft 40 wird außerhalb des Gebäudes an der Fassade 4 durch entsprechende Öffnungen/Kanäle oder dergleichen angesaugt und der Außenluftklappe-Zuluft 21 zugeführt. Die Außenluft 40, die zum Beispiel kontaminiert oder auch trocken sein kann, passiert anschließend den Außenluftfilter 20 und strömt dann durch den Zuluftventilator 19, der eine Luftantriebsquelle bildet. Vom Zuluftventilator 19 strömt die Außenluft hinter dem Wärmetauscher 18 entlang, ohne das eine Wechselwirkung mit dem Wärmetauscher 18 stattfindet. Die Außenluft 40 gelangt dann über den Schalldämpfer 16 zur Wärmerückgewinnungs-Feuchte-Einrichtung 15. Dort erfolgt eine 180 ° Umlenkung, das heißt, die Luft gelangt von dem Bereich der Rückseite in den Bereich der Vorderseite der raumlufttechnischen Einrichtung 7. Beim Passieren der Wärmerückgewinnungs-Feuchte-Einrichtung 15 wird ein Sorptionsrad, das sich um eine Drehachse 41 dreht, durchströmt, wodurch ein Wärme- und Feuchtetausch stattfindet. Anschließend strömt die Luft wieder über den Schalldämpfer 16 und gelangt zur Rückseite des Wärmetauschers 18. Von dort erfolgt eine Durchströmung des Wärmetauschers 18, sodass eine wärmetechnische Behandlung stattfinden kann. Die aus dem Wärmetauscher 18 austretende Luft tritt als Zuluft 42 in den Raum 1 ein. Der Eintritt erfolgt mittels geeigneter Luftlenkelemente. So ist es beispielsweise möglich, die Luft einseitig oder beidseitig derart auszuleiten, dass Fensterbereiche, die sich einseitig oder beidseitig der raumlufttechnischen Einrichtung 7 befinden, zumindest teilweise überströmt werden, um beispielsweise ein Beschlagen der Scheiben zu vermeiden. Damit die von der Außenluftklappe-Zuluft 21 kommende Luft sich nicht mit der dem Wärmetauscher 18 zugeleiteten Luft vermischt, ist eine Trennwand 42' vorgesehen. Sofern eine Umluftfunktion realisiert werden soll, weist die Zulufteinrichtung 36 einen Umlufteinlass 43 auf, sodass Raumluft der Außenluft 40 zugemischt und die Mischluft gemeinsam den Wärmetauscher 18 durchströmen und dann in den Raum 1 gelangen kann. Die Umluft ist in den Figuren 6 und 7 mit 44 (Pfeile) gekennzeichnet.

Bei der Ablufteinrichtung 37 ergibt sich folgende Durchströmung: Abluft 45, die aus dem Raum 1 stammt, tritt in die Einrichtung 7 ein und durchsetzt den Abluftfilter 14 und strömt zur Wärmerückgewinnungs-Feuchte-Einrichtung 15. Dort erfolgt beim Passieren des Sorptionsrades eine 180° Umlenkung, das heißt, die Luft gelangt vom vorderen Bereich der raumlufttechnischen Einrichtung 7 in den Bereich ihrer Rückseite und strömt dort über den Abluftventilator 13 durch die Außenluftklappe-Abluft 12 und durch den Fortluftauslass 33 in einen entsprechenden Kanal oder eine entsprechende Öffnung der Fassade 4, um in die Außenatmosphäre zu gelangen.

Dadurch, dass das Sorptionsrad in langsame Drehung versetzt ist und das Sorptionsrad hälftig mittels einer stehenden Trennwand 46 in eine Zone unterteilt ist, die im Wesentlichen von der Außenluft durchströmt wird und eine Zone gebildet wird, die von der Abluft durchströmt wird, kann zwischen der Außenluft und der Abluft ein Wärme- und Feuchteaustausch stattfinden. Das Sorptionsrad weist hierzu eine entsprechende Feinkanalstruktur auf, die aufgrund ihrer regenerativen Eigenschaft auch einen gewissen Stoffübertrag mit sich bringt, das heißt, geringfügige Mengen der Außenluft gelangen in den Abluftbereich und umgekehrt. Diese Stoffübertrag ist jedoch im Wesentlichen zu vernachlässigen und behindert die Funktion nicht. Im Winterbetrieb ist es aufgrund der Austauschfunktion möglich, die Wärme der Abluft zu nutzen, um die Außenluft vorzuheizen. Ferner wird die meist trockene Außenluft durch die feuchte Abluft im Feuchtigkeitsgehalt angereichert. Im Sommerbetrieb ermöglicht die relativ kühle Abluft ein Abkühlen der zuströmenden Außenluft, wobei Feuchte der Außenluft an die Abluft abgegeben werden kann, um die Zuluft zu entfeuchten. Die Wärmerückgewinnungsvorrichtung 39 ist nicht zwangsläufig mit einem Feuchteaustausch versehen, sondern es ist auch möglich, Wärmerückgewinnungssysteme ohne Feuchtigkeitsaustausch vorzusehen.

In den Figuren 8 sowie 10 bis 19 sind wahlweise mögliche Zusammenstellungen von lufttechnischen Kompononenten 10 bildenden Modulen 38 dargestellt. Die Figur 9 zeigt Kombinationsmöglichkeiten der Module 38.

Gemäß Figur 8 kann das Langgehäuse 11 mit insgesamt 7 Modulen 38 bestückt werden wobei diese zur Unterscheidung von der allgemeinen Bezeichnung "Modul" mit den Buchstaben A bis G gekennzeichnet sind.

**Im Einzelnen gilt:**

| | |
|---|---|
| A | Mechanisches-Abluft-Modul |
| B | Freie-Abluft-Modul |
| C | Mechanisches-Zuluft-Mod ul |
| D | Wärmetauscher-Modul |
| E | Umluft-Klappen-/Freie-Zuluft-Modul |
| F | Umluft-Ventilator-Modul |
| G | Wärmerückgewinnungs-Feuchte-Modul. |

Das Mechanische-Abluft-Modul A weist für den Eintritt von Abluft 45 einen Lufteinlass 60, einen Luftfilter 61 mit einem Ausgangsanschluss 62 auf. Ferner führt ein Eingangsanschluss 63 zu einem Schalldämpfer 64, der mit der Eingangsseite eines Ventilators 65 in Verbindung steht. Der Ventilator 65 führt ausgangsseitig zu einer Regelklappe 67, die zu einem Luftauslass 68 für den Auslass von Fortluft 47 führt. Der Eingang 66 steht ferner mit einem Eingangsanschluss 69 in Verbindung.

Das Freie-Abluft-Modul B weist einen Lufteinlass 70 für das Einströmen von Abluft 45 auf. Der Lufteinlass 70 führt zu einer Regelklappe 71, die zu einem Ausgangsanschluss 72 führt.

Das Mechanische-Zuluft-Modul C besitzt einen Lufteinlass 80 für den Eintritt von Außenluft 40. Der Lufteinlass 80 führt zu einer Regelklappe 81, die zu einem Eingang 82 eines Luftfilters 83 führt, der ausgangsseitig mit dem Eingang eines Ventilators 84 in Verbindung steht, dessen Ausgang über einen Schalldämpfer 85 zu einem Ausgangsanschluss 86 führt. Der Eingang 82 steht ferner mit einem Eingangsanschluss 87 in Verbindung.

Das Wärmetauscher-Modul D weist einen Eingangsanschluss 90, einen Wärmetauscher 91 und einen Luftauslass 92 für Zuluft 42 auf.

Das Umluft-Klappen-/Freie-Zuluft-Modul E besitzt einen Lufteinlass 100, der zu einer Regelklappe 101 führt, die einen Ausgangsanschluss 102 aufweist.

Das Umluft-Ventilator-Modul F besitzt einen Lufteinlass 110, der zu der Eingangsseite eines Ventilators 111 und ausgangsseitig des Ventilators 111 zu einem Ausgangsanschluss 112 führt. Der Ausgangsanschluss 112 steht ferner mit einem Eingangsanschluss 113 in Verbindung.

Schließlich weist das Wärmerückgewinnungs-Feuchte-Modul G einen Wärmerückgewinner 120 auf, der einen Außenlufteinlass 121 und einen Außenluftauslass 122 besitzt. Ferner weist der Wärmerückgewinner 120 einen Ablufteinlass 123 und einen Abluftauslass 124 auf.

Hinsichtlich der Figuren 3 bis 7 entsprechen sich folgende Bauelemente: Die Außenluftklappe - Abluft 12 entspricht der Regelklappe 67, der Abluftventilator 13 entspricht dem Ventilator 65, der Abluftfilter 14 entspricht dem Luftfilter 61, die Wärmerückgewinnungs-Feuchte-Einrichtung 15 entspricht dem Wärmerückgewinner 120, der Schalldämpfer 16 entspricht dem Schalldämpfer 85, der 4-Leiter-Wärmetauscher 18 entspricht dem Wärmetauscher 91, der Zuluftventilator 19 entspricht dem Ventilator 84, der Außenluftfilter 20 entspricht dem Luftfilter 83 und die Außenluftklappe-Zuluft 21 entspricht der Regelklappe 81. Ferner entspricht der Umlufteinlass 43 dem Lufteinlass 110, der Zulufteinlass 32 entspricht dem Lufteinlass 80 und der Fortluftauslass 33 entspricht dem Luftauslass 68.

Werden - gemäß Figur 8 - sämtliche Komponenten A bis G in einem Langgehäuse 11 zur Bildung einer dezentralen raumlufttechnischen Einrichtung 7 eingesetzt, so sind die einzelnen Module 38 wie folgt untereinander verbunden: Der Ausgangsanschluss 72 steht mit dem Eingangsanschluss 69 in Verbindung, der Ausgangsanschluss 62 steht mit dem Ablufteinlass 123 in Verbindung. Der Abluftauslass 124 steht mit dem Eingangsanschluss 63 in Verbindung, der Eingangsanschluss 113 steht mit dem Außenluftauslass 122 in Verbindung, der Außenluftanschluss 112 steht mit dem Eingangsanschluss 90 in Verbindung, der Ausgangsanschluss 86 steht mit dem Außenlufteinlass 121 in Verbindung und der Ausgangsanschluss 102 steht mit dem Eingangsanschluss 87 in Verbindung.

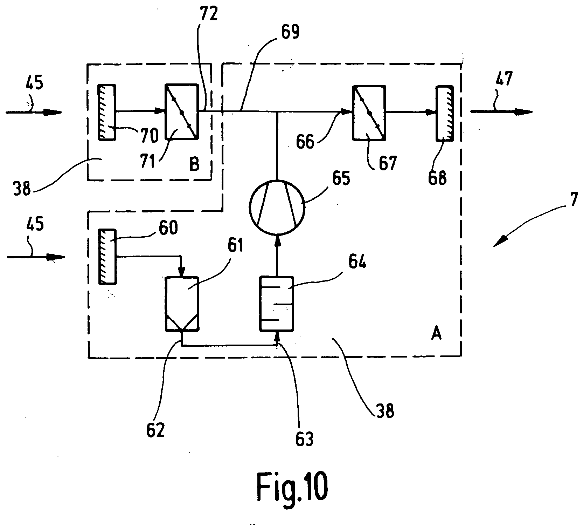

Befinden sich im Langgehäuse 11 der raumlufttechnischen Einrichtung 7 nur die Module A und B (Figur 10) so ist der Ausgangsanschluss 72 mit dem Eingangsanschluss 69 verbunden und es besteht eine Verbindung zwischen dem Ausgangsanschluss 62 und dem Eingangsanschluss 63. Die Ausgestaltungen der einzelnen Module A bis G in den Beispielen der Figuren 10 bis 19 entsprechen der beschriebenen Ausgestaltung der Module A bis G gemäß Figur 8.

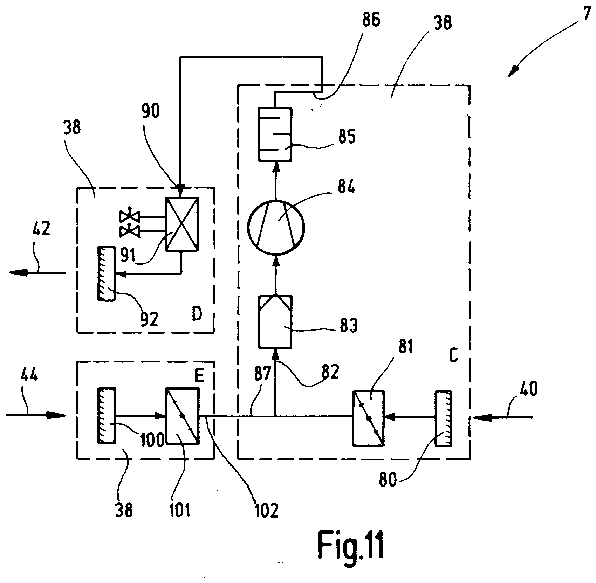

Bei der Modulkombination gemäß Figur 11 liegen die Module C, D und E vor, wobei der Ausgangsanschluss 86 mit dem Eingangsanschluss 90 und der Ausgangsanschluss 102 mit dem Eingangsanschluss 87 verbunden sind.

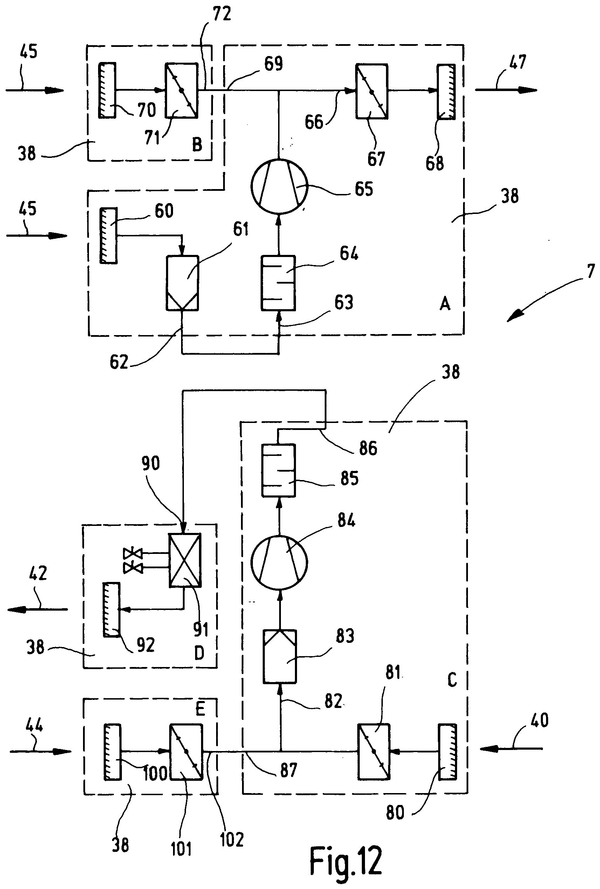

Bei der Modulkombination gemäß Figur 12 liegen die Module A, B, C, D und E vor, wobei hinsichtlich der Verbindungen gegenüber der Figur 8 lediglich folgender Unterschied besteht: Der Ausgangsanschluss 86 steht in Verbindung mit dem Eingangsanschluss 90 und der Ausgangsanschluss 62 steht in Verbindung mit dem Eingangsanschluss 63.

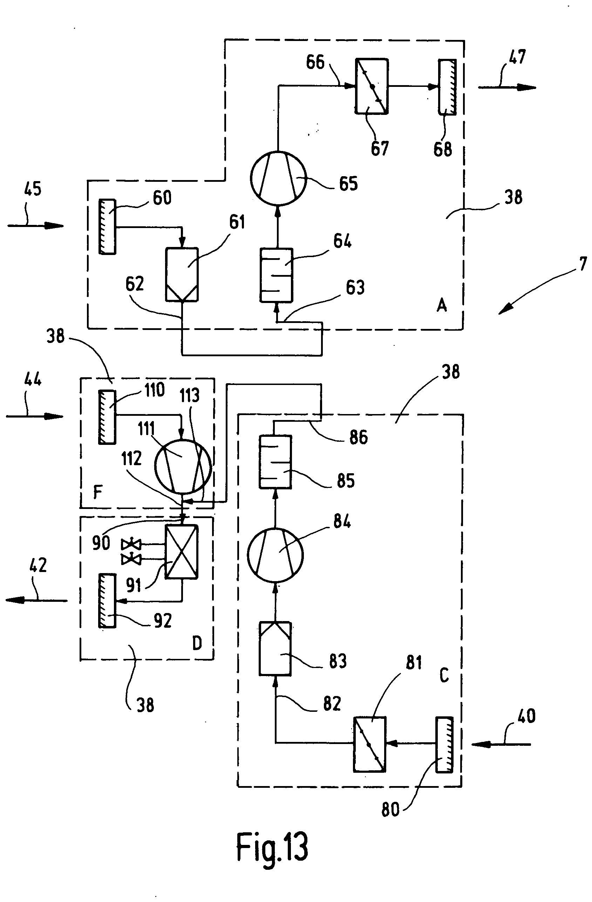

Beim Ausführungsbeispiel der Figur 13 sind die Module A, C, D und F vorhanden, wobei folgende Verbindungen vorliegen: Der Ausgangsanschluss 62 steht mit dem Eingangsanschluss 63 in Verbindung. Der Ausgangsanschluss 86 führt zum Eingangsanschluss 113. Ferner führt der Ausgangsanschluss 112 zum Eingangsanschluss 90.

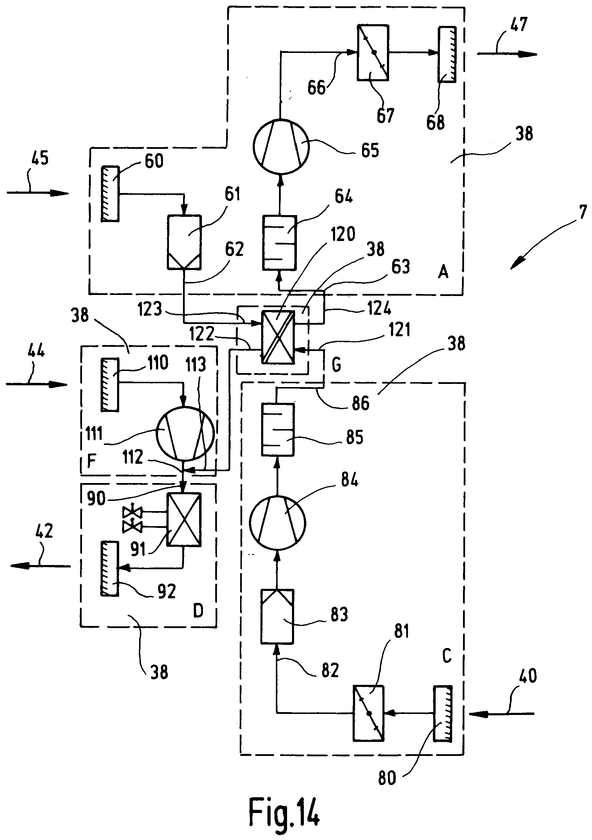

Gemäß der Modulkombination der Figur 14 sind die Module A, C, D, F und G vorhanden. Gegenüber dem Ausführungsbeispiel der Figur 8 ist somit lediglich der Eingangsanschluss 69 nicht bestückt und auch der Eingangsanschluss 87 unverbunden. Bei diesen Anschlüssen ist selbstverständlich ein Abschluss vorgesehen, sodass dort keine Luft austreten kann. Dies gilt entsprechend auch für die anderen Ausführungsbeispiele, bei denen bestimmte Eingänge oder Ausgänge nicht belegt sind.

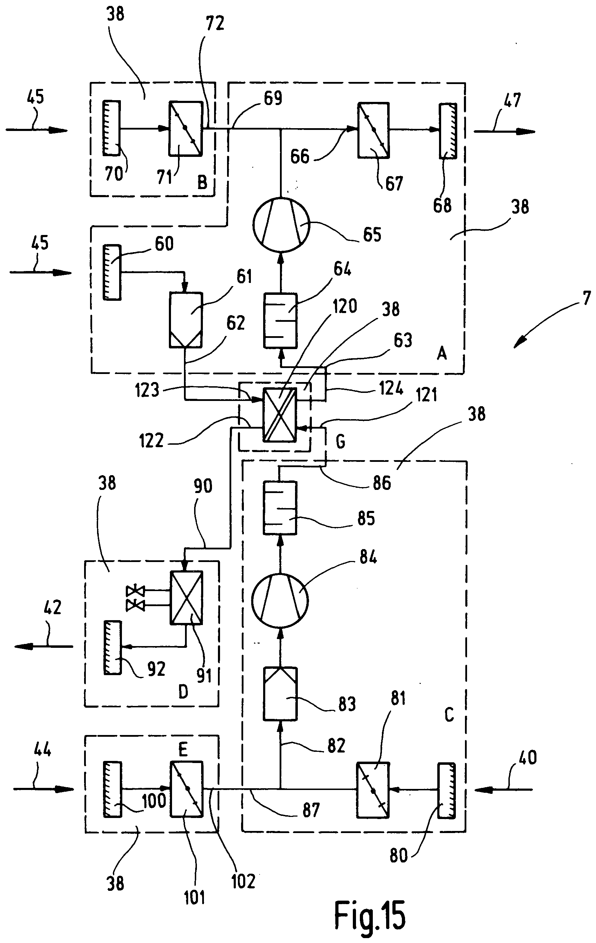

Beim Ausführungsbeispiel der Figur 15 sind die Module A, B, C, D, E und G vorhanden. Gegenüber dem Ausführungsbeispiel der Figur 8 fehlt demgemäss das Modul F. Gegenüber dem Ausführungsbeispiel der Figur 8 besteht demgemäss der Unterschied, dass der Außenluftauslass 122 direkt mit dem Eingangsanschluss 90 verbunden ist.

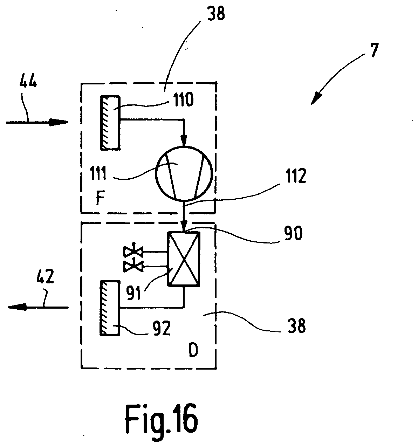

Bei der Modulkombination der Figur 16 liegen die Module D und F vor, wobei der Ausgangsanschluss 112 mit dem Eingangsanschluss 90 verbunden ist.

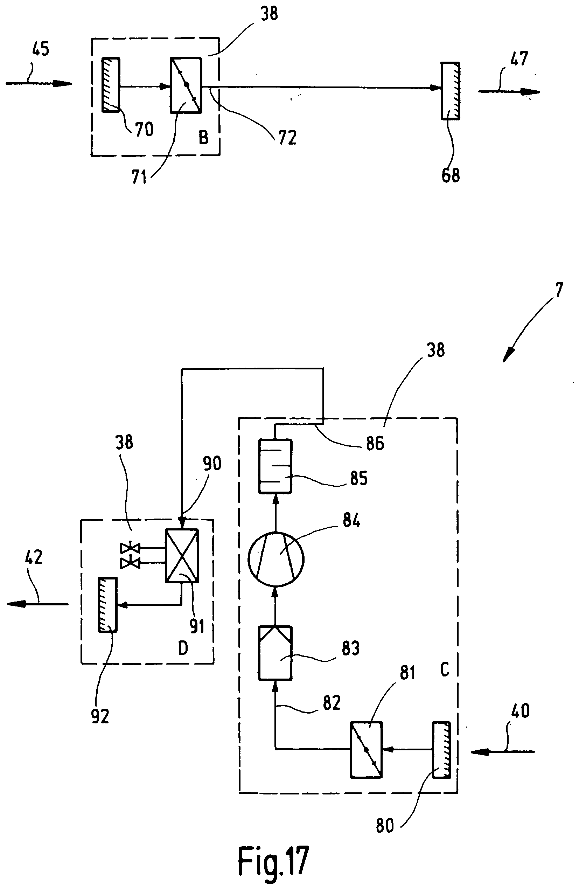

Bei der Modulkombination der Figur 17 liegen die Module B, C und D vor. Der Ausgangsanschluss 72 ist direkt verbunden mit dem Luftauslass 68 zum Auslass von Fortluft 47. In diesem Falle ist der Luftauslass 68 somit nicht modulgebunden. Ferner steht der Ausgangsanschluss 86 in Verbindung mit dem Eingangsanschluss 90.

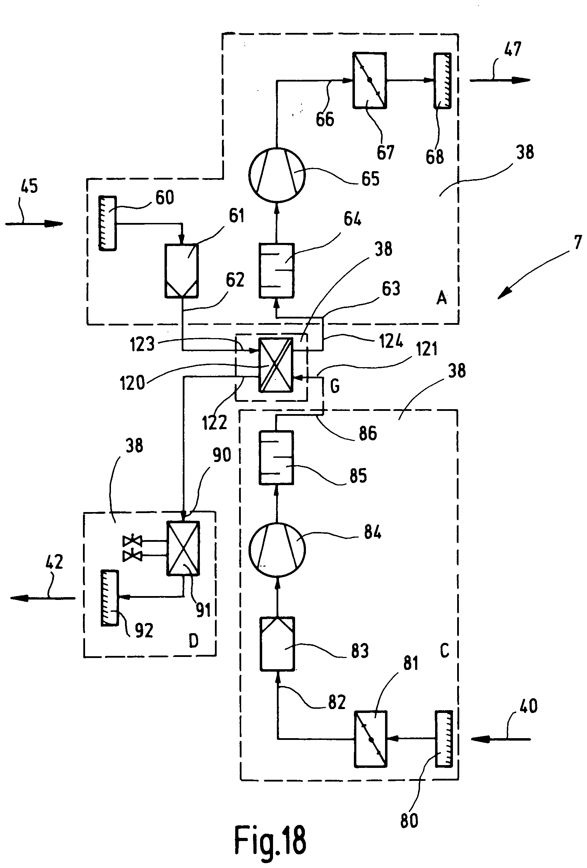

Beim Ausführungsbeispiel der Figur 18 liegt die Modulkombination A, C, D, G vor, wobei - in Abwandlung zum Ausführungsbeispiel der Figur 8 - der Eingangsanschluss 87 nicht belegt ist, der Außenluftauslass 122 direkt mit dem Eingangsanschluss 90 in Verbindung steht und auch der Eingangsanschluss 69 nicht belegt ist.

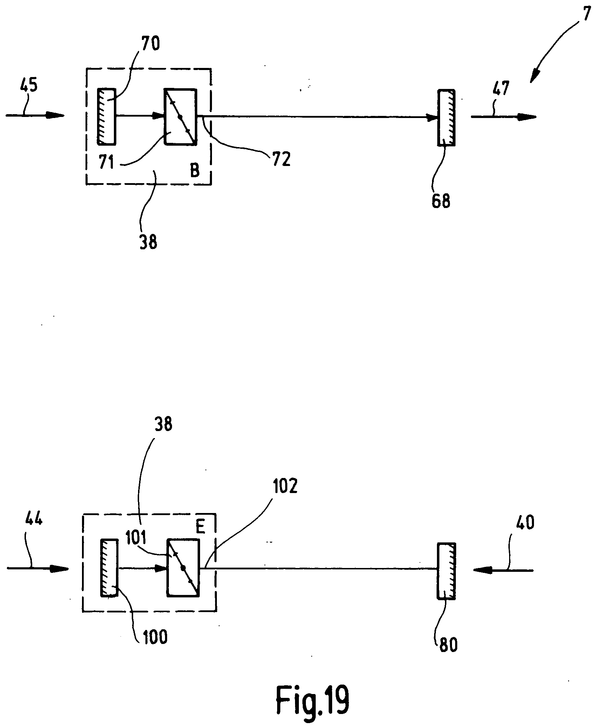

Schließlich ist beim Ausführungsbeispiel der Figur 19 eine Modulkombination B, E vorgesehen, wobei der Ausgangsanschluss 72 direkt zum nicht modulgebundenen Luftauslass 68 zum Auslass von Fortluft 47 führt. Ferner steht der Luftauslass 102 direkt mit dem Lufteinlass 80 in Verbindung, der nicht modulgebunden ist und dem Einlass von Außenluft 40 dient.

Die Figur 9 verdeutlicht die verschiedenen Modulkombinationen der Figuren 10 bis 19, wobei die Module als Spalte aufgeführt sind und als Reihe die verschiedenen Figuren 10 bis 19. Kreuze symbolisieren das Vorhandensein von Modulen, wobei eingeklammerte Kreuze weitere Alternativen darstellen. Die Matrix der Figur 9 zeigt lediglich eine Modulkombinationsauswahl. So ist es beispielsweise bevorzugt auch möglich, die Module A, C und D miteinander zu kombinieren. Diese entspricht dem Ausführungsbeispiel der Figur 13, jedoch unter Weglassung des Moduls F. Weitere Modulkombinationen sind selbstverständlich denkbar. So ist es beispielsweise auch möglich, eine Modulkombination aus den Modulen C, D und F vorzunehmen, um Außenluft dem Raum 1 zuzuführen und auch eine Umluftmöglichkeit zu schaffen.

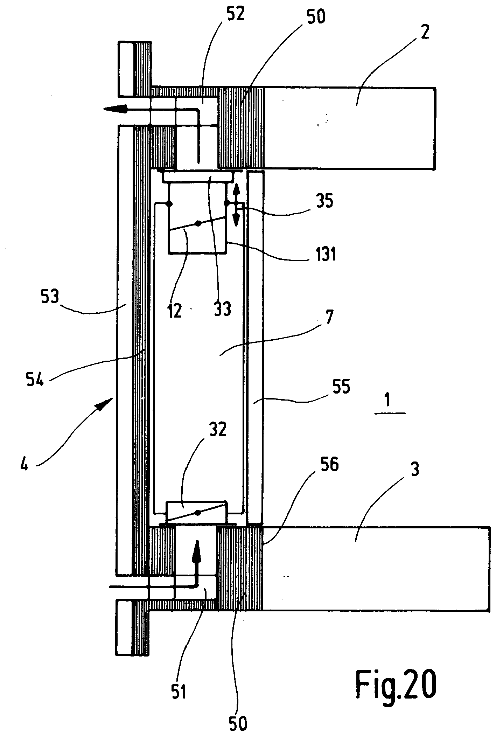

Die Figur 20 verdeutlicht nochmals die schnelle Einbaumöglichkeit der dezentralen raumlufttechnischen Einrichtung 7 in die Fassade 4 des Raumes 1, wobei von dem Raum 1 die Decke 2 und der Rohboden 3 dargestellt sind. Es ist erkennbar, dass die raumlufttechnische Einrichtung 7 mit ihrem Zulufteinlass 32 auf einen Träger 50 der Fassade 4 aufgestellt wird, wobei der Träger 50 einen entsprechenden, ins Freie führenden Zuluftkanal 51 für Außenluft aufweist. Durch das Aufstellen wird eine lufttechnische Verbindung geschaffen. Entsprechendes gilt für den einfach durchführbaren Anschluss des Fortluftauslasses 33, der - gemäß Doppelpfeil 35 - nach oben verlagert werden kann, um dichtschließend mit einem entsprechenden Fortluftkanal 52 in einem entsprechenden Träger 50 der Fassade 4 in Verbindung treten zu können. Ferner ist erkennbar, dass zusammen mit dem Fortluftauslass 33 auch die Außenluftklappe-Abluft 12 mitverlagert wird. Beide Bauelemente befinden sich beispielsweise in einem Schacht 131, der dichtend und relativ zum Langgehäuse 11 in Richtung des Doppelpfeils 35 verlagert werden kann. Der Figur 20 ist ferner deutlich zu entnehmen, dass im Bereich einer raumlufttechnischen Einrichtung 7 die Fassade 4 ein spezielles, besonders dünnbauendes Außenelement, zum Beispiel ein nicht durchsichtiges Glaselement 53 aufweist, an das eine Wärmeisolierung 54 anschließt. Es folgt dann die raumlufttechnische Einrichtung 7 sowie eine dem Raum 1 zugewandte Verkleidung 55. Die Verkleidung 55 fluchtet mit der raumseitigen Endfläche 56 der Fassade 4, sodass der Einbau beziehungsweise das Integrieren der raumlufttechnischen Einrichtung 7 nicht dazu führt, dass die Fassade 4 an dieser Stelle eine größere Bautiefe aufweist. In Zonen, in denen sich keine raumlufttechnische Einrichtung 7 befindet, weist die Fassade zum Beispiel Fenster auf.

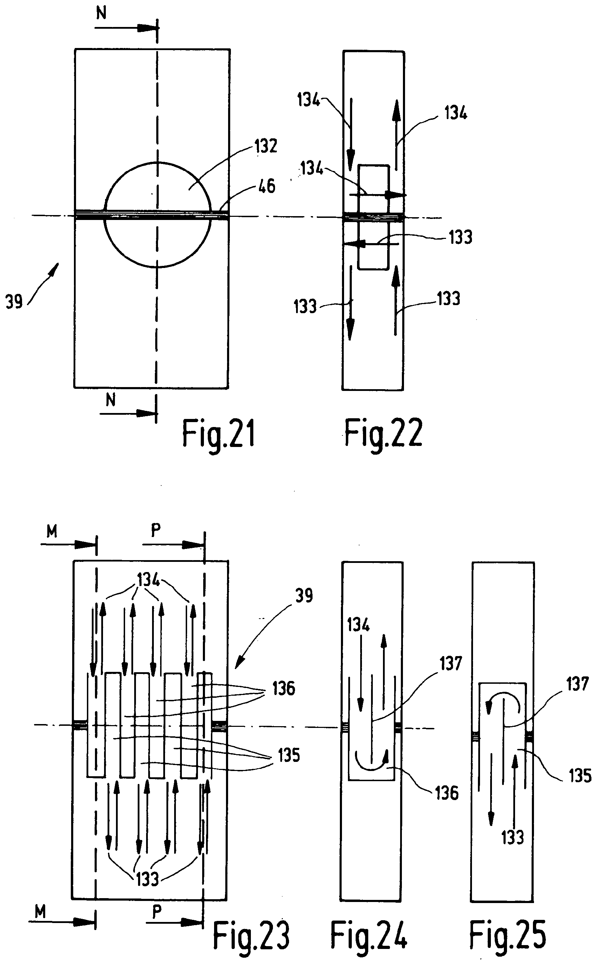

Die Figuren 21 und 22 verdeutlichen die regenerativen Wärmerückgewinnungsvorrichtung 39, sowie sie vorstehend bereits beschrieben wurde. Sie weist ein sich drehendes Sorptionsrad 132 und die bereits erwähnte Trennwand 46 auf, so dass die auf der jeweiligen Seite der Trennwand 46 vorliegenden Luftströme 133 und 134 jeweils eine 180° Umlenkung vornehmen und dabei das Sorptionsrad 31 durchsetzen, das dadurch erwärmt oder gekühlt wird, so das - durch die Drehung - die Wärme oder Kälte dem anderen Luftstrom mitgeteilt werden kann. Ferner speichert das Sorptionsrad 132 Feuchtigkeit, die zwischen den Luftströmen 133 und 134 übertragen werden kann.

Die Figur 23 verdeutlicht ein weiteres Ausführungsbeispiel einer Wärmerückgewinnungsvorrichtung 39, die als Rekuperator ausgebildet ist und demzufolge keine Vermischung der Stoffströme zulässt und bei der die Wärmeübertragung über feste Trennflächen erfolgt. Es ist erkennbar, dass ein Luftstrom 133 in mehreren Teilströmen in Kammern 135 eintreten und dort umgelenkt wieder austreten kann, wobei zwischen den Kammern 135 liegende, mit einem Luftstrom 134 zusammenwirkende Kammern 136 in Wärmeaustausch mit den Kammern 135 stehen und demzufolge ein Wärmeaustausch zwischen den beiden Luftströmen 133 und 134 stattfindet, wobei es jedoch nicht zu einem Luftübertritt kommt. Einzelne Kammern 135 und 136, die mit Umlenkblechen 137 versehen sind, sind hinsichtlich des Luftstromes 133 (Figur 25) und hinsichtlich des Luftstroms 134 (Figur 24) nochmals in den Figuren 25 und 24 dargestellt. Die Kammerwände sind demzufolge wärmeübertragend, so dass zwischen den Kammern 135 und 136 der Wärmeübergang erfolgt. Bei den Luftströmen 133 und 134 handelt es sich um die erwähnte Zuluft und die erwähnte Abluft.

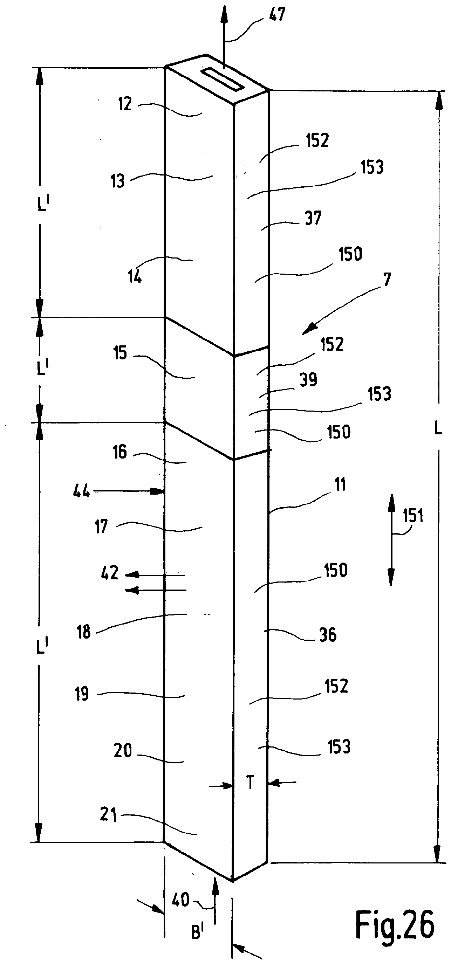

Die Figur 26 zeigt eine raumlufttechnische Einrichtung 7, die sich lediglich in Bezug auf die Bildung des Langgehäuses 11 von den zuvor beschriebenen und dargestellten lufttechnischen Einrichtung 7 unterscheidet. Bisher wurde beschrieben, dass sich die verschiedenen lufttechnischen Komponenten 10 beziehungsweise Module 38 innerhalb eines Langgehäuses 11 befinden beziehungsweise dort austauschbar und in gewählter Anzahl und Art angeordnet werden können. Beim Ausführungsbeispiel der Figur 26 ist vorgesehen, dass sich das Langgehäuse 11 dadurch bildet, dass mehrere Teilgeräte 150 vorgesehen sind, die derart in Richtung ihrer Längserstreckung (Doppelpfeil 151) aneinander befestigt sind. Im Übrigen gelten die Ausführungen zu den vorherigen Figuren 1 bis 25 entsprechend. Die Teilgeräte 150 werden im Ausführungsbeispiel der Figur 26 gebildet durch die Ablufteinrichtung 37, die Wärmerückgewinnungsvorrichtung 39 und die Zulufteinrichtung 36, sodass drei Teilgeräte 150 vorliegen. Diese sind fluchtend aneinander befestigt, beispielsweise miteinander verschraubt. Die Baubreiten B' aller Teilgeräte 150 sind gleich groß, dies gilt auch für die Bautiefen T. Die einzelnen Baulängen L' der drei Teilgeräte 150 addiert sich aufgrund ihrer Befestigung aneinander, sodass sich insgesamt die Baulänge L ergibt. Die einzelnen Teilgeräte 150 weisen jeweils ein Teilgehäuse 152 auf, wobei die einzelnen Teilgehäuse 152 jeweils in Längserstreckung 151 fluchtend aneinander befestigt sind. Es ist ersichtlich, dass unterschiedlich große Baulängen L' vorliegen. Die Baulänge L' ist abhängig von der jeweiligen lufttechnischen Funktion des entsprechenden Teilgeräts 150. Jedes Teilgehäuse 152 bildet ein Teil-Langgehäuse 153, das dadurch gekennzeichnet ist, dass die Bautiefe T wesentlich kleiner als die Baubreite B' und die wiederum wesentlich kleiner als die Baulänge L' des jeweiligen Teil-Langgehäuses 153 ist. Die aneinander befestigten Teil-Langgehäuse 153 bilden demgemäß das bereits zu den vorstehenden Figuren 1 bis 25 erwähnte Langgehäuse 11 aus, dessen Baulänge L jedoch von der Anzahl der Teilgehäuse abhängig ist. Im einfachsten Fall wird das Langgehäuse 11 von nur einem Teil-Langgehäuse 153 gebildet, sodass sich keine raumhohe Länge ergibt.

In der Figur 26 ist gezeigt, dass - entsprechend wie in Figur 5 - das obere Teilgerät 153 eine Ablufteinrichtung 37 bildet und demzufolge unter anderem die Außenluftklappe-Abluft 12, den Abluftventilator 13 und den Abluftfilter 14 aufweist. Das mittlere Teil-Langgehäuse 153 beherbergt eine Wärmerückgewinnungs-Feuchte-Einheit 15 und das untere Teilgerät 150, das als Zulufteinrichtung 36 ausgebildet ist, weist den bereits vorstehend zur Figur 5 erwähnten Schalldämpfer 16, den Umluft-Tangentialventilator 17, den 4-Leiter-Wärmetauscher 18, den Zuluftventilator 19, den Außenluftfilter 20 und die Außenluftklappe-Zuluft 21 auf. Dementsprechend tritt in das untere Teilgerät 150 Außenluft 40 ein und Zuluft 42 aus. Ferner tritt dort Umluft 44 ein. Aus dem oberen Teilgerät 150 tritt Abluft 45 ein und Fortluft 47 aus.

Aus dem Vorstehenden wird erkennbar, dass es bei einer Grundausstattung eines Raumes 1 nicht erforderlich ist, alle aus der Figur 26 hervorgehenden Teilgeräte 150 oder aus der Tabelle 9 hervorgehenden, als Teilgeräte realisierte Module zu verwenden, da es beispielsweise auch ausreichend sein kann, in einer ersten Ausbaustufe nur das untere Teilgerät 150, also die Zulufteinrichtung 36, einzusetzen. Soll zu einem späteren Zeitpunkt auch eine Ablufteinrichtung 37 vorgesehen sein, so können das obere und das untere Teilgerät 150 entsprechend nachträglich zusammengeschraubt und in die Fassade 4 des Raumes 1 integriert werden. Soll nach einem anderen Ausführungsbeispiel eine Wärmerückgewinnungseinrichtung 39 vorgesehen sein, so ist dies ebenfalls möglich, indem zwischen diesen beiden Teilgehäuse 152 das Teilgerät 150 eingesetzt wird, das die Wärmerückgewinnungseinheit aufweist.

Selbstverständlich ist es möglich, auch andere lufttechnische Funktionen mit den einzelnen Teilgeräten 150 zu realisieren, das heißt, jedes ein Teilgehäuse 152 aufweisende Teilgerät 150 kann eine entsprechende lufttechnische Aufgabe übernehmen. So ist es beispielsweise möglich, die zu den vorhergehenden Ausführungsbeispielen bereits erwähnten Module (insbesondere Figuren 8 und 9) auch einzeln jeweils als Teilgerät 150 auszuführen, sodass eine wählbare Zusammenstellung einzelner Teilgeräte 150 zu einer entsprechenden raumlufttechnischen Einrichtung 7 führt. Auch ist es möglich, Teilgeräte 150 vorzusehen, in denen sich die Funktionen mehrerer der bereits vorstehend erwähnten Module A bis G (Figur 9) befinden. Hier kann eine entsprechende freie Wahl getroffen werden, einerseits was die lufttechnische Bestückung des jeweiligen Teilgeräts 150 betrifft und andererseits auch die aneinandergereihte Aufstellung entsprechend ausgestatteter Teilgeräte 150 (Anzahl der fluchtend in Längserstreckung aneinander befestigten Teilgeräte), um insgesamt ein flaches Langgehäuse 11 zu schaffen.

## Patentansprüche

1. Raum eines Gebäudes, mit einer dezentralen raumlufttechnischen Einrichtung zum Klimatisieren und/oder Belüften des Raumes, deren lufttechnische Komponente beziehungsweise lufttechnische Komponenten in einem Gehäuse angeordnet sind, wobei das Gehäuse als flaches Langgehäuse (11) ausgebildet und in eine Fassade des Raumes integriert ist, wobei mindestens ein Zulufteinlass (32) und mindestens ein Fortluftauslass (33) vorgesehen sind, **dadurch gekennzeichnet, dass** das Gehäuse der Länge (L) nach aufrecht aufgestellt und raumhoch ausgebildet ist, und dass sich der Zulufteinlass (32) an einer ersten Seite (28) des Langgehäuses (11) und der Fortluftauslass (33) an einer der ersten Seite (28) gegenüberliegenden zweiten Seite (29) des Langgehäuses (11) befindet und die erste und die zweite Seite (28,29) quer, insbesondere rechtwinklig, zu der Richtung der Längserstreckung des Langgehäuses (11) verlaufen.

2. Raum nach Anspruch 1, **gekennzeichnet durch** die wählbare Zusammensetzung der Einrichtung aus mindestens einem eine lufttechnische Funktion ausübenden Teilgerät (150) aus einer Auswahl von mehreren zur Verfügung stehenden, gleiche oder unterschiedliche lufttechnische Funktionen aufweisenden Teilgeräten (150).

3. Raum nach einem der vorhergehenden Ansprüche, **dadurch gekennzeichnet, dass** mehrere Teilgeräte (150) insbesondere zur Bildung eines Gesamtgeräts wählbar aneinander befestigbar sind.

4. Raum nach einem der vorhergehenden Ansprüche, **dadurch gekennzeichnet, dass** die Teilgeräte (150) reihenförmig aneinander befestigbar sind.

5. Raum nach einem der vorhergehenden Ansprüche, **dadurch gekennzeichnet, dass** jedes Teilgerät (150) ein Teilgehäuse (152) aufweist.

6. Raum nach Anspruch 5, **dadurch gekennzeichnet, dass** die Teilgehäuse (152) in Richtung ihrer Längserstreckung aneinander befestigbar beziehungsweise befestigt sind.

7. Raum nach einem der vorhergehenden Ansprüche 5 oder 6, **dadurch gekennzeichnet, dass** eines der Teilgehäuse (152) oder mehrere aneinandergereiht aneinander befestigte Teilgehäuse (152) das Gehäuse, insbesondere das flache Langgehäuse (11) bilden.

8. Raum nach einem der vorhergehenden Ansprüche 5-7, **dadurch gekennzeichnet, dass** jedes Teilgehäuse (152) als flaches Teil-Langgehäuse (153) ausgebildet ist.

9. Raum nach einem der vorhergehenden Ansprüche, **dadurch gekennzeichnet, dass** die Abmessungen jedes Teil-Langgehäuses (153) und/oder des Langgehäuses (11) hinsichtlich seiner Bautiefe (T) zur Baubreite (B') zur Baulänge beziehungsweise Bauhöhe (L) das Verhältnis von etwa 1 : 2 bis 3 : 3 bis 25 aufweisen.

10. Raum nach einem der vorhergehenden Ansprüche 8 oder 9, **dadurch gekennzeichnet, dass** das mindestens eine Teil-Langgehäuse (153) ein der Länge (L) nach aufrecht aufgestelltes Gehäuse ist.

11. Raum nach einem der vorhergehenden Ansprüche, **dadurch gekennzeichnet, dass** das Langgehäuse (11) eine Bauhöhe (L) von 1.800 - 3.500 mm, insbesondere 2.000 - 3.000 mm, aufweist.

12. Raum nach einem der vorhergehenden Ansprüche, **dadurch gekennzeichnet, dass** das Langgehäuse (11) oder Teil-Langgehäuse (153) eine Baubreite (B') von 300 - 500 mm, insbesondere 350-450 mm, aufweist.

13. Raum nach einem der vorhergehenden Ansprüche, **dadurch gekennzeichnet, dass** das Langgehäuse (11) oder Teil-Langgehäuse (153) eine Bautiefe (T) von 100 - 300 mm, insbesondere 130-200 mm, aufweist.

14. Raum nach einem der vorhergehenden Ansprüche, **dadurch gekennzeichnet, dass** zumindest einige, insbesondere sämtliche der lufttechnischen Komponenten (10) zueinander reihenförmig im Langgehäuse (11) oder Teil-Langgehäuse (153) angeordnet sind.

15. Raum nach einem der vorhergehenden Ansprüche, **dadurch gekennzeichnet, dass** zumindest einige der lufttechnischen Komponenten (10) in Richtung der Baubreite (B') des Langgehäuses (11) oder Teil-Langgehäuse (153), also in Quererstreckung, oder in Richtung der Bautiefe (T) des Langgehäuses (11) oder Teil-Langgehäuse (153) hintereinander im Langgehäuse (11) oder Teil-Langgehäuse (153) angeordnet sind.

16. Raum nach einem der vorhergehenden Ansprüche, **dadurch gekennzeichnet, dass** die erste Seite (28) oder die zweite Seite (29) eine Standseite (34) des Langgehäuses (11) ist.

17. Raum nach einem der vorhergehenden Ansprüche, **dadurch gekennzeichnet, dass** die zweite Seite (29) oder ein Teil von ihr eine höhenverstellbare Seite ist.

18. Raum nach einem der vorhergehenden Ansprüche, **gekennzeichnet durch** eine Zulufteinrichtung (36) und eine Ablufteinrichtung (37), die jeweils mindestens eine der lufttechnischen Komponenten (10) aufweisen.

19. Raum nach einem der vorhergehenden Ansprüche, **dadurch gekennzeichnet, dass** ein Teilgerät als Zulufteinrichtung (36) und/oder ein Teilgerät als Ablufteinrichtung (37) ausgebildet ist.

20. Raum nach einem der vorhergehenden Ansprüche, **dadurch gekennzeichnet, dass** der Zulufteinlass (32) der Zulufteinrichtung (36) und der Fortluftauslass (33) der Ablufteinrichtung (37) angehören.

21. Raum nach einem der vorhergehenden Ansprüche, **dadurch gekennzeichnet, dass** Zulufteinrichtung (36) und Ablufteinrichtung (37) wärmetechnisch über mindestens eine Wärmerückgewinnungsvorrichtung (39) gekoppelt/koppelbar sind.

22. Raum nach einem der vorhergehenden Ansprüche, **dadurch gekennzeichnet, dass** die Wärmerückgewinnungsvorrichtung (39) eine Feuchtübertragung aufweist.

23. Raum nach einem der vorhergehenden Ansprüche, **dadurch gekennzeichnet, dass** die Wärmerückgewinnungsvorrichtung (39) als Rotationswärmerückgewinner, insbesondere Wärmerad, ausgebildet ist.

24. Raum nach einem der vorhergehenden Ansprüche, **dadurch gekennzeichnet, dass** die Wärmerückgewinnungsvorrichtung (39) eine regenerative Wärmerückgewinnungsvorrichtung ist.

25. Raum nach einem der vorhergehenden Ansprüche, **dadurch gekennzeichnet, dass** die Wärmerückgewinnungsvorrichtung (39) eine rekuperative Wärmerückgewinnungsvorrichtung ist.

26. Raum nach einem der vorhergehenden Ansprüche, **dadurch gekennzeichnet, dass** die Wärmerückgewinnungsvorrichtung (39) einen Luft-Luft-Wärmetauscher mit jeweils einer 180°-Luftumlenkung der beiden wärmetauschenden Luftströme aufweist.

27. Raum nach einem der vorhergehenden Ansprüche, **dadurch gekennzeichnet, dass** ein Teilgerät (150) als Wärmerückgewinnungsvorrichtung (39) und/oder dass ein Teilgerät (150) als Umlufteinrichtung ausgebildet ist.

28. Raum nach einem der vorhergehenden Ansprüche, **dadurch gekennzeichnet, dass** die Zulufteinrichtung (36) und die Ablufteinrichtung (37) in Längsrichtung des Langgehäuses (11) aufeinander folgend zonal angeordnet sind.

29. Raum nach einem der vorhergehenden Ansprüche, **dadurch gekennzeichnet, dass** zumindest einige der lufttechnischen Komponenten (10) zonal, insbesondere zonal aneinandergrenzend, insbesondere in Längsrichtung des Langgehäuses (11) zonal, insbesondere in Längsrichtung des Langgehäuse (11) zonal aneinandergrenzend, im Langgehäuse (11) angeordnet sind.

30. Raum nach einem der vorhergehenden Ansprüche, **dadurch gekennzeichnet, dass** die Wärmerückgewinnungsvorrichtung (39) insbesondere zonal zwischen der Zulufteinrichtung (36) und Ablufteinrichtung (37) angeordnet ist.

31. Raum nach einem der vorhergehenden Ansprüche, **dadurch gekennzeichnet, dass** die Baubreite (B') des Langgehäuses (11) und/oder die Baubreite des Teilgehäuses (152) oder aller Teilgehäuse (152) der Baubreite der breitesten der Komponenten (10) entspricht.

32. Raum nach einem der vorhergehenden Ansprüche, **dadurch gekennzeichnet, dass** die Bautiefe (T) des Langgehäuses (11) und/oder die Bautiefe des Teilgehäuses (152) oder aller Teilgehäuse (152) der Bautiefe der tiefsten der Komponenten (10) entspricht.

33. Raum nach einem der vorhergehenden Ansprüche, **dadurch gekennzeichnet, dass** mindestens eine lufttechnische Komponente (10), insbesondere sämtliche lufttechnischen Komponenten (10), als Modul/Module (38) wählbar in das Langgehäuse (11) einsetzbar beziehungsweise aus dem Langgehäuse (11) entnehmbar ausgebildet ist/sind.

34. Raum nach einem der vorhergehenden Ansprüche, **dadurch gekennzeichnet, dass** mindestens eine lufttechnische Komponente (10), insbesondere sämtliche lufttechnische Komponenten (10) beziehungsweise mindestens ein Modul (38), insbesondere sämtliche Module (38), jeweils als Teilgehäuse (152) aufweisende Teilgeräte (150) ausgebildet sind und in wählbarer Zusammenstellung gehäusemäßig aneinanderreihbar aneinander befestigbar sind.

35. Raum nach einem der vorhergehenden Ansprüche, **gekennzeichnet durch** die lufttechnischen Komponenten (10): Mechanische-Abluft-Komponente, Freie-Abluft-Komponente, Mechanische-Zuluft-Komponente, Wärmetauscher-Komponente, Umluft-Klappen-/Freie-Zuluft-Komponente, Umluft-Ventilator-Komponente, Wärmerückgewinnungs-Komponete und/oder Wärmerückgewinnungs-Feuchte-Komponente.

36. Raum nach einem der vorhergehenden Ansprüche, **gekennzeichnet durch** die Module (38): Mechanisches-Abluft-Modul (A), Freie-Abluft-Modul (B), Mechanisches-Zuluft-Modul (C), Wärmetauscher-Modul (D), Umluft-Klappen-/Freie-Zuluft-Modul (E), Umluft-Ventilator-Modul (F), Wärmerückgewinnungs-Modul (G) und/oder Wärmerückgewinnungs-Feuchte-Modul (G).

37. Raum nach einem der vorhergehenden Ansprüche, **dadurch gekennzeichnet, dass** die Wärmetauscher-Komponente (10) mindestens einen Wärmetauscher (91) aufweist, der an wasserführende Leitungen angeschlossen ist, die derart im Langgehäuse (11) verlaufen, dass an ihnen vorbeiströmende Luft durch die Temperatur der Leitungen temperiert wird.

38. Raum nach einem der vorhergehenden Ansprüche, **dadurch gekennzeichnet, dass** die Umluft-Ventilator-Komponente als Ventilator (111) einen Querstromventilator, insbesondere mit Freistrahl, aufweist.

39. Raum nach einem der vorhergehenden Ansprüche, **dadurch gekennzeichnet, dass** zumindest eine der lufttechnischen Komponenten (10) mit einer Schalldämpfungseinrichtung (64,85) versehen ist.

40. Raum nach einem der vorhergehenden Ansprüche, **gekennzeichnet durch** die Ausbildung der Einrichtung als Fassadeneinrichtung, insbesondere Fassadenklimamodul-Einrichtung oder Fassadenlüftungsmodul-Einrichtung.

## Claims

1. Room of a building, the room having a decentralised room air technology device for air-conditioning and/or ventilating the room, the air technology component or air technology components of said device being arranged in a housing, wherein the housing is configured as a flat elongated housing (11) and is integrated into a façade of the room, wherein at least one supply air inlet (32) and at least one exhaust air outlet (33) are provided, **characterised in that** the housing with respect to its length (L) is positioned lengthwise upright and is configured in a floor-to-ceiling manner and that the supply air inlet (32) is located on a first side (28) of the elongated housing (11) and the exhaust air outlet (33) is located on a second side (29) of the elongated housing (11), said second side lying opposite the first side (28), and the first and the second side (28, 29) extending in a transverse manner, in particular at a right angle, with respect to the direction of the longitudinal extent of the elongated housing (11).

2. Room according to Claim 1, **characterised by** the selectable composition of the device of at least one sub-unit (150) that performs an air technology function from a selection of multiple available sub-units (150) that comprise identical or different air technology functions.

3. Room according to any one of the preceding claims, **characterised in that** multiple sub-units (150) may be fastened to one another in a selectable manner in particular so as to form an entire unit.

4. Room according to any one of the preceding claims, **characterised in that** the sub-units (150) may be fastened to one another in a row.

5. Room according to any one of the preceding claims, **characterised in that** each sub-unit (150) comprises a sub-housing (152).

6. Room according to Claim 5, **characterised in that** the sub-housings (152) may be fastened or are fastened to one another in the direction of their longitudinal extent.

7. Room according to any one of the preceding claims 5 or 6, **characterised in that** one of the sub-housings (152) or multiple sub-housings (152) that are fastened to one another in a row form or forms the housing, in particular the flat elongated housing (11).

8. Room according to any one of the preceding claims 5-7, **characterised in that** each sub-housing (152) is configured as a flat elongated sub-housing (153).

9. Room according to any one of the preceding claims, **characterised in that** the dimensions of each elongated sub-housing (153) and/or the elongated housing (11) with regard to its construction depth (T) relative to the construction width (B') relative to the construction length or construction height (L) comprise the ratio of approximately 1 : 2 to 3 : 3 to 25.

10. Room according to any one of the preceding claims 8 or 9, **characterised in that** the at least one elongated sub-housing (153) is a housing that with respect to the length (L) is positioned lengthwise upright.

11. Room according to any one of the preceding claims, **characterised in that** the elongated housing (11) comprises a construction height (L) of 1 800 - 3 500 mm, in particular 2 000 - 3 000 mm.

12. Room according to any one of the preceding claims, **characterised in that** the elongated housing (11) or the elongated sub-housing (153) comprises a construction width (B') of 300 - 500 mm, in particular 350 - 450 mm.

13. Room according to any one of the preceding claims, **characterised in that** the elongated housing (11) or elongated sub-housing (153) comprises a construction depth (T) of 100 - 300 mm, in particular 130 - 200 mm.

14. Room according to any one of the preceding claims, **characterised in that** at least some, in particular all of the air technology components (10) are arranged in a row with respect to one another in the elongated housing (11) or elongated sub-housing (153).

15. Room according to any one of the preceding claims, **characterised in that** at least some of the air technology components (10) are arranged one behind the other in the elongated housing (11) or elongated sub-housing (153) in the direction of the construction width (B') of the elongated housing (11) or elongated sub-housing (153), in other words in the transverse extension, or in the direction of the construction depth (T) of the elongated housing (11) or elongated sub-housing (153).

16. Room according to any one of the preceding claims, **characterised in that** the first side (28) or the second side (29) is a stand side (34) of the elongated housing (11).

17. Room according to any one of the preceding claims, **characterised in that** the second side (29) or a part of said second side is a height-adjustable side.

18. Room according to any one of the preceding claims, **characterised by** a supply air device (36) and an exhaust air device (37) that respectively comprise at least one of the air technology components (10).

19. Room according to any one of the preceding claims, **characterised in that** a sub-unit is configured as a supply air device (36) and/or a sub-unit is configured as an exhaust air device (37).

20. Room according to any one of the preceding claims, **characterised in that** the supply air inlet (32) is associated with the supply air device (36) and the exhaust air outlet (33) is associated with the exhaust air device (37).

21. Room according to any one of the preceding claims, **characterised in that** the supply air device (36) and the exhaust air device (37) are coupled/may be coupled thermally via at least one heat recovery device (39).

22. Room according to any one of the preceding claims, **characterised in that** the heat recovery device (39) comprises a moisture transfer.

23. Room according to any one of the preceding claims, **characterised in that** the heat recovery device (39) is configured as a circulating heat recoverer, in particular a rotary air-to-air heat exchanger.

24. Room according to any one of the preceding claims, **characterised in that** the heat recovery device (39) is a regenerative heat recovery device.

25. Room according to any one of the preceding claims, **characterised in that** the heat recovery device (39) is a recuperative heat recovery device.

26. Room according to any one of the preceding claims, **characterised in that** the heat recovery device (39) comprises an air to air heat exchanger having respectively a 180° air deflection of the two heat exchanging air currents.

27. Room according to any one of the preceding claims, **characterised in that** a sub-unit (150) is configured as a heat recovery device (39) and/or that a sub-unit (150) is configured as a circulating air device.

28. Room according to any one of the preceding claims, **characterised in that** the supply air device (36) and the exhaust air device (37) are arranged in consecutive zones in the longitudinal direction of the elongated housing (11).

29. Room according to any one of the preceding claims, **characterised in that** at least some of the air technology components (10) are arranged in the elongated housing (11) in zones, in particular adjoining zones, in particular in zones in the longitudinal direction of the elongated housing (11), in particular in adjoining zones in the longitudinal direction of the elongated housing (11).

30. Room according to any one of the preceding claims, **characterised in that** the heat recovery device (39) is arranged between the supply air device (36) and the exhaust air device (37), in particular in a zone.

31. Room according to any one of the preceding claims, **characterised in that** the construction width (B') of the elongated housing (11) and/or the construction width of the sub-housing (152) or all the sub-housings (152) correspond to the construction width of the widest of the components (10).

32. Room according to any one of the preceding claims, **characterised in that** the construction depth (T) of the elongated housing (11) and/or the construction depth of the sub-housing (152) or all the sub-housings (152) correspond to the construction depth of the deepest of the components (10).

33. Room according to any one of the preceding claims, **characterised in that** at least one air technology component (10), in particular all the air technology components (10), is/are configured as a module/ modules (38) that may be selectively inserted into the elongated housing (11) or removed from the elongated housing (11).

34. Room according to any one of the preceding claims, **characterised in that** at least one air technology component (10), in particular all the air technology components (10), or at least one module (38), in particular all the modules (38), are respectively configured as sub-units (150) that comprise sub-housings (152) and may be fastened to one another in a selective arrangement in a housing-wise manner.

35. Room according to any one of the preceding claims, **characterised by** the air technology components (10): mechanical exhaust air component, free exhaust air component, mechanical supply air component, heat exchanger component, circulatory air flaps/free supply air component, circulatory air ventilator component, heat recovery component and/or heat recovery moisture component.

36. Room according to any one of the preceding claims, **characterised by** the modules (38): mechanical exhaust air module (A), free exhaust air module (B), mechanical supply air module (C), heat exchanger module (D), circulatory air flaps / free supply air module (E), circulatory air ventilator module (F), heat recovery module (G) and/or heat recovery moisture module (G).

37. Room according to any one of the preceding claims, **characterised in that** the heat exchanger component (10) comprises at least one heat exchanger (91) that is connected to water-guiding lines that extend in the elongated housing (11) in such a manner that air that passes by said lines is tempered by means of the temperature of the lines.

38. Room according to any one of the preceding claims, **characterised in that** the circulatory air ventilator component comprises a cross-flow fan as a ventilator (111), in particular with an open jet.

39. Room according to any one of the preceding claims, **characterised in that** at least one of the air technology components (10) is provided with a sound absorbing device (64, 85).

40. Room according to any one of the preceding claims, **characterised by** the configuration of the device as a façade device, in particular a façade air-conditioning module device or façade ventilating module device.

## Revendications

1. Pièce d'un bâtiment, comportant un dispositif décentralisé de traitement de l'air d'une pièce pour la climatisation et/ou la ventilation de la pièce, dont le composant de traitement d'air, respectivement les composants de traitement d'air, est (sont) disposé(s) dans un boîtier, le boîtier étant configuré sous la forme d'un boîtier longitudinal plat (11) et intégré dans une façade de la pièce, au moins une entrée d'air soufflé (32) et au moins une sortie d'air extrait (33) étant prévues, **caractérisé en ce que** le boîtier est mis en place debout sur la longueur (L) et est configuré sur la hauteur de la pièce, et **en ce que** l'entrée d'air soufflé (32) se trouve sur un premier côté (28) du boîtier longitudinal (11) et la sortie d'air extrait (33) sur un second côté (29) du boîtier longitudinal (11) qui est opposé au premier côté (28), et le premier et le second côté (28, 29) s'étendent transversalement, en particulier à angle droit, par rapport au sens longitudinal du boîtier longitudinal (11).

2. Pièce selon la revendication 1, **caractérisé par** la composition sélectionnable du dispositif à partir d'au moins un appareil partiel (150) exerçant une fonction de traitement d'air parmi un choix de plusieurs appareils partiels (150) disponibles et présentant des fonctions de traitement d'air similaires ou différentes.

3. Pièce selon une des revendications précédentes, **caractérisé en ce que** plusieurs appareils partiels (150) peuvent être fixés les uns aux autres de manière sélectionnable en particulier pour former un appareil global.

4. Pièce selon une des revendications précédentes, **caractérisé en ce que** les appareils partiels (150) peuvent être fixés les uns aux autres en forme de rangée.

5. Pièce selon une des revendications précédentes, **caractérisé en ce que** chaque appareil partiel (150) présente un boîtier partiel (152).

6. Pièce selon la revendication 5, **caractérisé en ce que** les boîtiers partiels (152) peuvent être, respectivement sont, fixés les uns aux autres dans le sens de leur extension longitudinale.

7. Pièce selon une des revendications précédentes 5 ou 6, **caractérisé en ce qu'**un des boîtiers partiels (152) ou plusieurs boîtiers partiels (152) fixés les uns aux autres bout à bout forment le boîtier, en particulier le boîtier longitudinal plat (11).

8. Pièce selon une des revendications précédentes 5 à 7, **caractérisé en ce que** chaque boîtier partiel (152) est configuré sous la forme d'un boîtier longitudinal partiel plat (153).

9. Pièce selon une des revendications précédentes, **caractérisé en ce que** les dimensions de chaque boîtier longitudinal partiel (153) et/ou du boîtier longitudinal (11) présentent, concernant sa profondeur en construction (T) sur la largeur en construction (B') sur la longueur en construction, respectivement la hauteur en construction (L), le rapport d'environ 1:2 à 3:3 à 25.

10. Pièce selon une des revendications précédentes 8 ou 9, **caractérisé en ce que** l'au moins un boîtier longitudinal partiel (153) est un boîtier mis en place debout sur la longueur (L).

11. Pièce selon une des revendications précédentes, **caractérisé en ce que** le boîtier longitudinal (11) présente une hauteur en construction (L) de 1 800 à 3 500 mm, en particulier 2 000 à 3 000 mm.

12. Pièce selon une des revendications précédentes, **caractérisé en ce que** le boîtier longitudinal (11) ou boîtier longitudinal partiel (153) présente une largeur en construction (B') de 300 à 500 mm, en particulier 350 à 450 mm.

13. Pièce selon une des revendications précédentes, **caractérisé en ce que** le boîtier longitudinal (11) ou boîtier longitudinal partiel (153) présente une profondeur en construction (T) de 100 à 300 mm, en particulier 130 à 200 mm.

14. Pièce selon une des revendications précédentes, **caractérisé en ce qu'**au moins quelques-uns, en particulier l'ensemble, des composants de traitement d'air (10) sont disposés en rangée les uns par rapport aux autres dans le boîtier longitudinal (11) ou le boîtier longitudinal partiel (153).

15. Pièce selon une des revendications précédentes, **caractérisé en ce qu'**au moins quelques-uns des composants de traitement d'air (10) sont disposés, dans le sens de la largeur de construction (B') du boîtier longitudinal (11) ou du boîtier longitudinal partiel (153), c'est-à-dire dans l'extension transversale, ou dans le sens de la profondeur de construction (T) du boîtier longitudinal (11) ou boîtier longitudinal partiel (153), les uns derrière les autres dans le boîtier longitudinal (11) ou boîtier longitudinal partiel (153).

16. Pièce selon une des revendications précédentes, **caractérisé en ce que** le premier côté (28) ou le second côté (29) est un côté posé à plat (34) du boîtier longitudinal (11).

17. Pièce selon une des revendications précédentes, **caractérisé en ce que** le second côté (29) ou une partie de celui-ci est un côté réglable en hauteur.

18. Pièce selon une des revendications précédentes, **caractérisé par** un dispositif d'air soufflé (36) et un dispositif d'air vicié (37), qui présentent chacun au moins un des composants de traitement d'air (10).

19. Pièce selon une des revendications précédentes, **caractérisé en ce qu'**un appareil partiel est configuré sous la forme d'un dispositif d'air soufflé (36) et/ou un appareil partiel sous la forme d'un dispositif d'air vicié (37).

20. Pièce selon une des revendications précédentes, **caractérisé en ce que** l'entrée d'air soufflé (32) appartient au dispositif d'air soufflé (36) et la sortie d'air extrait (33) appartient au dispositif d'air vicié (37).

21. Pièce selon une des revendications précédentes, **caractérisé en ce que** le dispositif d'air soufflé (36) et le dispositif d'air vicié (37) sont couplés/couplables pour le traitement thermique par le biais d'au moins un dispositif de récupération de chaleur (39).

22. Pièce selon une des revendications précédentes, **caractérisé en ce que** le dispositif de récupération de chaleur (39) présente un transfert d'humidité.

23. Pièce selon une des revendications précédentes, **caractérisé en ce que** le dispositif de récupération de chaleur (39) est configuré sous la forme d'un récupérateur de chaleur rotatif, en particulier d'un échangeur de chaleur rotatif.

24. Pièce selon une des revendications précédentes, **caractérisé en ce que** le dispositif de récupération de chaleur (39) est un dispositif de récupération de chaleur par régénération.

25. Pièce selon une des revendications précédentes, **caractérisé en ce que** le dispositif de récupération de chaleur (39) est un dispositif de récupération de chaleur par récupération.

26. Pièce selon une des revendications précédentes, **caractérisé en ce que** le dispositif de récupération de chaleur (39) présente un échangeur de chaleur air-air comportant respectivement une déviation d'air à 180° des deux écoulements d'air pour l'échange de chaleur.

27. Pièce selon une des revendications précédentes, **caractérisé en ce qu'**un appareil partiel (150) est configuré sous la forme d'un dispositif de récupération de chaleur (39) et/ou **en ce qu'**un appareil partiel (150) est configuré sous la forme d'un dispositif de circulation d'air.

28. Pièce selon une des revendications précédentes, **caractérisé en ce que** le dispositif d'air soufflé (36) et le dispositif d'air vicié (37) sont disposés les uns sur les autres de manière zonale en se suivant dans le sens longitudinal du boîtier longitudinal (11).

29. Pièce selon une des revendications précédentes, **caractérisé en ce qu'**au mois certains des composants de traitement d'air (10) sont disposés dans le boîtier longitudinal (11) de manière zonale, en particulier de manière contigüe les uns aux autres, en particulier de manière zonale dans le sens longitudinal du boîtier longitudinal (11), en particulier de manière zonale et contiguë dans le sens longitudinal du boîtier longitudinal (11).

30. Pièce selon une des revendications précédentes, **caractérisé en ce que** le dispositif de récupération de chaleur (39) est disposé en particulier de manière zonale entre le dispositif d'air soufflé (36) et le dispositif d'air vicié (37).

31. Pièce selon une des revendications précédentes, **caractérisé en ce que** la largeur en construction (B') du boîtier longitudinal (11) et/ou la largeur en construction du boîtier partiel (152) ou de tous les boîtiers partiels (152) correspond(ent) à la largeur en construction des composants (10) les plus larges.

32. Pièce selon une des revendications précédentes, **caractérisé en ce que** la profondeur en construction (T) du boîtier longitudinal (11) et/ou la profondeur en construction du boîtier partiel (152) ou de tous les boîtiers partiels (152) correspond(ent) à la profondeur en construction des composants (10) les plus profonds.

33. Pièce selon une des revendications précédentes, **caractérisé en ce qu'**au moins un composant de traitement d'air (10), en particulier tous les composants de traitement d'air (10), est (sont) configurée(s) sous la forme d'un (de) module(s) (38) qui de manière sélectionnable peuvent être insérés dans le boîtier longitudinal (11), respectivement être enlevés du boîtier longitudinal (11).

34. Pièce selon une des revendications précédentes, **caractérisé en ce qu'**au moins un composant de traitement d'air (10), en particulier tous les composants de traitement d'air (10), respectivement au moins un module (38), en particulier tous les modules (38), sont configurés chacun sous la forme d'appareils partiels (150) se présentant sous la forme d'un boîtier partiel (152) et peuvent être fixés les uns aux autres bout à bout dans un assemblage sélectionnable conformément au boîtier.

35. Pièce selon une des revendications précédentes, **caractérisé par** les composants de traitement d'air (10) : composant d'air vicié mécanique, composant d'air vicié libre, composant d'air soufflé mécanique, composant d'échangeur de chaleur, composant de clapet de circulation d'air / d'air soufflé libre, composant de ventilateur de circulation d'air, composant de récupération de chaleur et/ou composant de récupération de chaleur / humidité.

36. Pièce selon une des revendications précédentes, **caractérisé par** les modules (38) : module d'air vicié mécanique (A), module d'air vicié libre (B), module d'air soufflé mécanique (C), module d'échangeur de chaleur (D), module de clapet de circulation d'air / d'air soufflé libre (E), module de ventilateur de circulation d'air (F), module de récupération de chaleur (G) et/ou module de récupération de chaleur / humidité (G).

37. Pièce selon une des revendications précédentes, **caractérisé en ce que** le composant d'échangeur de chaleur (10) présente au moins un échangeur de chaleur (91) qui est raccordé à des lignes conductrices d'eau qui s'étendent dans le boîtier longitudinal (11) de telle sorte que l'air passant sur celui-ci est tempéré par la température des lignes.

38. Pièce selon une des revendications précédentes, **caractérisé en ce que** le composant de ventilateur de circulation d'air (111) présente un ventilateur d'écoulement transversal, en particulier à jet libre.

39. Pièce selon une des revendications précédentes, **caractérisé en ce qu'**au moins un des composants de traitement d'air (10) est muni d'un dispositif d'insonorisation (64, 85).

40. Pièce selon une des revendications précédentes, **caractérisé par** la formation du dispositif sous la forme d'un dispositif en façade, en particulier dispositif de module de climatisation en façade ou dispositif de module de ventilation en façade.
